# EUROPÄISCHE PATENTSCHRIFT

(11) **EP 3 375 603 B1**
(45) Veröffentlichungstag und Bekanntmachung des Hinweises auf die Patenterteilung: **26.10.2022**
(21) Anmeldenummer: 18161286.2
(22) Anmeldetag: 12.03.2018
(51) Int. Cl.: B32B 5/02, B32B 5/18, B32B 5/20, B32B 5/30, B32B 9/02, C14B 7/00, C14B 11/00

(54) **GEWEBEANORDNUNG MIT EINEM GEWEBE UND EINER AUFSCHÄUMBAREN UND/ODER AUFGESCHÄUMTEN FUNKTIONSSCHICHT SOWIE VERFAHREN ZUM HERSTELLEN EINER GEWERBEANORDNUNG MIT EINEM GEWEBE UND EINER AUFGESCHÄUMTEN FUNKTIONSSCHICHT**
FABRIC ARRANGEMENT WITH A FABRIC AND A FOAMABLE AND/OR FOAMED FUNCTIONAL LAYER AND METHOD FOR PRODUCING A FABRIC ARRANGEMENT WITH A FABRIC AND A FOAMED FUNCTIONAL LAYER
AGENCEMENT DE TISSU AVEC UN TISSU ET UNE COUCHE FONCTIONNELLE MOUSSABLE ET/OU MOUSSÉE AINSI QUE PROCÉDÉ DE FABRICATION D'UN AGENCEMENT DE TISSU AVEC UN TISSU ET UNE COUCHE FONCTIONNELLE MOUSSÉE

(30) Priorität: 14.03.2017 DE 102017204233
(43) Veröffentlichungstag der Anmeldung: 19.09.2018
(73) Patentinhaber: Müller, Bastian, 80636 München (DE)
(72) Erfinder: Müller, Bastian, 80636 München (DE)
(74) Vertreter: Kordel, Mattias

(56) Entgegenhaltungen:
- EP-A2- 0 435 049
- US-B1- 6 746 774

## Beschreibung

Die Erfindung betrifft eine Gewebeanordnung mit einem Gewebe und einer aufschäumbaren und/oder aufgeschäumten Funktionsschicht und ein Verfahren zum Herstellen einer Gewebeanordnung mit einem Gewebe und einer aufgeschäumten Funktionsschicht.

Ein Gewebe wird typischerweise beschichtet, indem ein Druckmaterial auf das Gewebe aufgetragen wird, wobei das Druckmaterial nach einem Trocknungs- und Fixiervorgang fest mit dem Gewebe verbunden wird. Auf diese Weise werden häufig Bekleidungsstücke oder Accessoires zu dekorativen Zwecken mit erhabenen Schriftzeichen oder Mustern versehen. Typischerweise erschöpft sich die Anwendung für diese Beschichtungen aufgrund einer vergleichsweise geringen maximalen Schichtdicke in derartigen dekorativen Anwendungen. Das Aufbringen des Druckmaterials mit einer größeren Schichtdicke auf einem Gewebe, beispielsweise als stoßdämpfende Schutzschicht, lässt sich derzeit nicht realisieren, da insbesondere beim Trocknen dickerer Schichten Spannungsrisse in dem Druckmaterial auftreten. Die Spannungsrisse ergeben sich beispielsweise durch einen Feuchtigkeitsverlust in einem wasserbasierten Druckmaterial beim Trocknen, wodurch sich das Volumen des Druckmaterials verringert, was zu Porosität führt.

Aus US 6,746,774 B1 geht eine Lederanordnung mit einer Lederschicht und einer aufgeschäumten Funktionsschicht hervor, welche auf einer Seite der Lederschicht angeordnet ist. Die Funktionsschicht weist einen Schaum auf, der in einem Bindemittel gebundene, gasgefüllte Kunststoffkugeln aufweist.

Aus EP 0 435 049 A2 geht ein Imprägnierlatex für offenzelligen Polyurethanschaum hervor, enthaltend als wässrige Dispersion beziehungsweise Aufschlämmung neben Flammschutzmitteln als Bindemittel ein carboxylgruppenhaltiges Acrylsäureestercopolymer.

Der Erfindung liegt die Aufgabe zugrunde, eine Gewebeanordnung mit einem Gewebe und mit einer aufschäumbaren und/oder aufgeschäumten Funktionsschicht und ein Verfahren zum Herstellen einer Gewebeanordnung mit einem Gewebe und mit einer aufgeschäumten Funktionsschicht zu schaffen, wobei die genannten Nachteile nicht auftreten.

Die Aufgabe wird gelöst, indem die Gegenstände der unabhängigen Ansprüche geschaffen werden. Vorteilhafte Ausgestaltungen ergeben sich aus den Unteransprüchen.

Die Aufgabe wird insbesondere gelöst, indem eine Gewebeanordnung mit einem Gewebe und mit einer aufschäumbaren Funktionsschicht geschaffen wird, welche auf einer ersten Seite des Gewebes fest aufgebracht ist. Zusätzlich oder alternativ wird eine Gewebeanordnung mit einem Gewebe und mit einer aufgeschäumten Funktionsschicht geschaffen, welche auf einer ersten Seite des Gewebes fest aufgebracht ist. Die Funktionsschicht weist eine erste Lage auf, wobei die erste Lage der Funktionsschicht ein erstes Druckgemisch mit einem Schaum aufweist. Der Schaum weist ein Bindemittel und eine Vielzahl von in dem Bindemittel gebundenen Kunststoffkugeln, welche mit einem Gas gefüllt sind, auf. Das erste Druckgemisch weist einen eine Dehnbarkeit der Funktionsschicht steigernden Flexibilitätszusatz auf, welcher ein Acrylsäureester-Copolymer umfasst. Der Flexibilitätszusatz ist mit einem Massenanteil von mindestens 7 % bis höchstens 15 % an dem ersten Druckgemisch beigemischt. Die Gewebeanordnung mit dem Gewebe und der aufschäumbaren und/oder aufgeschäumten Funktionsschicht weist Vorteile gegenüber dem Stand der Technik auf. Dadurch, dass das erste Druckgemisch zusätzlich zu dem Schaum den Flexibilitätszusatz aufweist, wird eine Dehnbarkeit der Funktionsschicht insbesondere in einem solchen Maße gesteigert, dass deutlich größere Dicken der Funktionsschicht realisierbar sind, ohne dass Spannungsrisse in der Funktionsschicht, insbesondere beim Trocknen derselben, auftreten.

Bei einer erfindungsgemäßen Gewebeanordnung mit einer aufschäumbaren Funktionsschicht handelt es sich insbesondere um eine Vorstufe einer erfindungsgemäßen Gewebeanordnung mit einer aufgeschäumten Funktionsschicht. Es ist vorzugsweise vorgesehen, dass die Gewebeanordnung mit einer aufschäumbaren Funktionsschicht zumindest teilweise mittels des im Folgenden noch beschriebenen erfindungsgemäßen Verfahrens hergestellt ist, wobei insbesondere ein Aufschäumvorgang, insbesondere durch thermisches Fixieren und Aktivieren der Gewebeanordnung mit der Funktionsschicht durch Erwärmen, noch nicht oder noch nicht vollständig durchgeführt ist. Insbesondere werden die beschriebenen Vorteile dann verwirklicht, wenn die Funktionsschicht der erfindungsgemäßen Gewebeanordnung aufgeschäumt ist.

Mittels der aufgeschäumten Funktionsschicht wird in vorteilhafter Weise insbesondere eine Schutzschicht realisiert, welche Stöße auf eine Oberfläche der Gewebeanordnung dämpft. Alternativ oder zusätzlich ist die aufgeschäumte Funktionsschicht insbesondere abriebfest, rutschhemmend, wasserdicht, und/oder thermisch isolierend ausgebildet. Insbesondere bleibt die Gewebeanordnung mit der aufgeschäumten Funktionsschicht vergleichsweise leicht. Sie weist vorzugsweise definierte flexible Zonen und/oder definierte steife Zonen auf. Weiterhin können mittels der aufgeschäumten Funktionsschicht Oberflächen von Geweben konturiert werden. Durch Ausbildung einer dreidimensionalen Oberfläche der aufgeschäumten Funktionsschicht wird insbesondere eine akustische Wirkung der Gewebeanordnung realisiert, welche zur Schalldämmung geeignet ist. Mittels der aufgeschäumten Funktionsschicht können insbesondere eine angenehme Haptik und eine ansprechende, außergewöhnliche Optik realisiert werden.

Eine Anwendung der Gewebeanordnung mit der aufschäumbaren und/oder aufgeschäumten Funktionsschicht wird vorzugsweise in Fahrzeugen, insbesondere Kraftfahrzeugen, Flugzeugen oder Schiffen realisiert, beispielsweise im Bereich der Interieurgestaltung. Insbesondere wird eine ergonomische Ausbildung von Sitzen oder anderen Nutzflächen realisiert. Weiterhin können mit der Gewebeanordnung mittels der Funktionsschicht Belüftungskanäle an einer Oberfläche von Sitzen geschaffen werden. Darüber hinaus ergeben sich Anwendungsmöglichkeiten bei der Herstellung von Bekleidung, insbesondere von Schutzkleidung, und Schuhen, insbesondere Schuhsohlen. Weiterhin können Taschen oder Rucksäcke, insbesondere eine Rückenpolsterung derselben, aus der erfindungsgemäßen Gewebeanordnung hergestellt werden. Diese kann auch zur Polsterung von Kinderwagen oder Babywickelunterlagen vorgesehen sein. Darüber hinaus sind Einrichtungsgegenstände im privaten oder gewerblichen Bereich, insbesondere Sitzmöbel oder Aufbewahrungsbehälter unter Verwendung einer solchen Gewebeanordnung herstellbar. Auch eine Verwendung der Gewebeanordnung mit der Funktionsschicht im Bereich der Gebäudeausstattung, insbesondere als Raumtrenner, Akustikwand oder Paneele, ist möglich.

Das Gewebe ist vorzugsweise als Textil ausgebildet. Alternativ ist vorzugsweise vorgesehen, dass das Gewebe als Leder, insbesondere als Naturleder oder Kunstleder, ausgebildet ist. Es stellt insbesondere einen Untergrund oder ein Trägermaterial für die Funktionsschicht dar. Vorzugsweise ist die insbesondere aufgeschäumte Funktionsschicht derart fest auf der ersten Seite des Gewebes aufgebracht, dass das Gewebe mit der Funktionsschicht gemäß einem bestimmungsgemäßen Gebrauch mechanisch verformt werden kann, ohne dass sich die Funktionsschicht von dem Gewebe löst. Vorzugsweise ist die insbesondere aufgeschäumte Funktionsschicht derart fest auf dem Gewebe aufgebracht, dass auch eine thermische Belastung und/oder eine Beaufschlagung mit flüssigen Medien gemäß einem bestimmungsgemäßen Gebrauch ohne weiteres möglich sind. Vorzugsweise ist das Gewebe mit der insbesondere aufgeschäumten Funktionsschicht waschbar, wobei - in Abhängigkeit von dem Gewebe und/oder der Funktionsschicht - Waschtemperaturen von bis zu 90 °C realisierbar sind.

Bei einem bevorzugten Ausführungsbeispiel der Gewebeanordnung weist die Funktionsschicht, insbesondere mit der ersten Lage, zumindest bereichsweise eine Dicke von mindestens 1 mm bis höchstens 20 mm, vorzugsweise bis höchstens 15 mm, vorzugsweise bis höchstens 10 mm, vorzugsweise eine Dicke von 1 mm, oder 1,5 mm, oder 3 mm, oder 5 mm, oder 7 mm, oder 10 mm auf.

Das Bindemittel weist vorzugsweise mindestens einen Bestandteil auf oder besteht aus mindestens einem Bestandteil, welcher ausgewählt ist aus einer Gruppe bestehend aus einem Acrylat, einem Styrol, einer Acrylsäure, einem Ester, einem Copolymer, einem Polyester, einem Polyethylen, und einem Polyurethan. Besonders bevorzugt weist das Bindemittel ein Polyurethan auf oder besteht aus einem Polyurethan. Vorzugsweise weisen die Polyurethane aliphatische und/oder aromatische Isocyanate, besonders bevorzugt aliphatische Isocyanate auf.

Die Kunststoffkugeln sind in dem Bindemittel vorzugsweise homogen verteilt angeordnet. Die Kunststoffkugeln weisen jeweils insbesondere eine Hülle auf, welche vorzugsweise ein Polymer aufweist oder aus einem Polymer besteht. Das in den Kunststoffkugeln befindliche Gas dehnt sich insbesondere bei einer Erwärmung desselben aus. Die Hüllen der Kunststoffkugeln sind daher jeweils vorzugsweise dehnbar ausgebildet, sodass eine Ausdehnung derselben bei einer Expansion des darin befindlichen Gases möglich ist. Besonders bevorzugt erweichen die Hüllen der Kunststoffkugeln jeweils bei einer Erwärmung derselben. Insbesondere sind die Hüllen der Kunststoffkugeln jeweils gasdicht ausgebildet, wobei sich diese ausdehnen können, ohne dass Gas aus den Kunststoffkugeln austritt. Es ist insbesondere möglich, dass die Kunststoffkugeln jeweils eine Form aufweisen, die von einer Kugel abweicht, jedoch im Wesentlichen eine kugelförmige Form darstellt.

Vorzugsweise weist der Flexibilitätszusatz ein Acrylsäureester-Copolymer auf, welches mit Polyacrylsäure vermischt, insbesondere abgemischt ist. Vorzugsweise weist der Flexibilitätszusatz eine Kunstharzdispersion auf oder besteht aus einer Kunstharzdispersion, welche insbesondere als wasserbasierter, selbstvernetzender, und/oder heißfixierender Flockkleber ausgebildet ist, wobei der Flexibilitätszusatz vorzugsweise weiterhin Verdickersysteme und Additive aufweist.

Bei einem bevorzugten Ausführungsbeispiel der Gewebeanordnung weist der Flexibilitätszusatz einen Massenanteil an dem ersten Druckgemisch und/oder einem weiteren Druckgemisch der erfindungsgemäßen Gewebeanordnung, insbesondere einem zweiten Druckgemisch oder einem Basisdruckgemisch, von mindestens 7 % bis höchstens 15 % auf. Mittels des Flexibilitätszusatzes wird in vorteilhafter Weise die Dehnbarkeit der Funktionsschicht erhöht, wobei insbesondere Spannungsrisse bei einem Trocknen der Funktionsschicht, insbesondere des ersten und/oder eines des weiteren Druckgemischs verhindert werden. Insbesondere wird eine gleichmäßige Oberfläche der Funktionsschicht, insbesondere der ersten und/oder einer weiteren Lage der erfindungsgemäßen Funktionsschicht, insbesondere mindestens einer zweiten Lage oder einer Basislage, realisiert.

Es wird ein Ausführungsbeispiel der Gewebeanordnung bevorzugt, das sich dadurch auszeichnet, dass das erste Druckgemisch ein Schaumadditiv aufweist, welches ein aliphatisches Polyesterurethan umfasst. Vorzugsweise weist das Schaumadditiv eine Polymerdispersion auf oder besteht aus einer Polymerdispersion. Die Polymerdispersion ist besonders bevorzugt eine wässrige Polymerdispersion. Mittels des Schaumadditivs ist vorzugsweise ein Auftrieb des Schaums, insbesondere eine Expansion der Kunststoffkugeln, variabel einstellbar. Insbesondere bewirkt ein erhöhter Massenanteil des Schaumadditivs an dem Druckgemisch, insbesondere dem ersten und/oder einem weiteren Druckgemisch der erfindungsgemäßen Gewebeanordnung, eine Verringerung des Auftriebs des Schaums bei einer Erwärmung desselben. Ein erhöhter Massenanteil des Schaumadditivs an dem Druckgemisch bewirkt mithin insbesondere ein kleineres Volumen der aufgeschäumten Funktionsschicht, insbesondere eine kleinere Dicke derselben. Ein verringerter Massenanteil des Schaumadditivs an dem Druckgemisch, insbesondere dem ersten und/oder einem weiteren Druckgemisch der erfindungsgemäßen Gewebeanordnung, bewirkt insbesondere ein größeres Volumen der aufgeschäumten Funktionsschicht, insbesondere eine größere Dicke derselben.

Bei einem bevorzugten Ausführungsbeispiel der Gewebeanordnung weist die Funktionsschicht eine ein Basisdruckgemisch aufweisende Basislage auf, welche auf der ersten Seite des Gewebes auf dem Gewebe aufgebracht ist. Die Basislage der Funktionsschicht weist vorzugsweise eine Dicke auf, welche geringer ist als eine Dicke der ersten Lage der Funktionsschicht. Vorzugsweise ist die erste Lage der Funktionsschicht, insbesondere unmittelbar, auf der Basislage der Funktionsschicht aufgebracht. Das Basisdruckgemisch weist vorzugsweise zumindest den Schaum und den Flexibilitätszusatz auf. Besonders bevorzugt ist das Basisdruckgemisch hinsichtlich einer Zusammensetzung desselben, insbesondere den Bestandteilen und deren Massenanteilen, dem ersten Druckgemisch gleich oder zumindest ähnlich. Vorzugsweise weist die Basislage der Funktionsschicht eine Dicke von höchstens 0,1 mm, besonders bevorzugt von höchstens 0,05 mm, besonders bevorzugt von höchstens 0,01 mm auf. Mittels der Basislage wird ein Eindringen von Feuchtigkeit, insbesondere ein Auswässern der ersten Lage der Funktionsschicht, in das Gewebe reduziert, besonders bevorzugt verhindert.

Weiterhin wird eine Haftung der Funktionsschicht, insbesondere der ersten Lage derselben, auf dem Gewebe mittels der Basislage erhöht.

Es wird ein Ausführungsbeispiel der Gewebeanordnung bevorzugt, das sich dadurch auszeichnet, dass die Funktionsschicht mindestens eine zweite, ein zweites Druckgemisch aufweisende Lage aufweist, welche auf einer dem Gewebe abgewandten Seite der ersten Lage der Funktionsschicht auf der ersten Lage der Funktionsschicht aufgebracht ist. Vorzugsweise weist das zweite Druckgemisch zumindest den Schaum und den Flexibilitätszusatz auf. Vorzugsweise weist das zweite Druckgemisch zusätzlich das Schaumadditiv auf. Besonders bevorzugt ist das zweite Druckgemisch hinsichtlich einer Zusammensetzung desselben, insbesondere den Bestandteilen und deren Massenanteilen, dem ersten Druckgemisch gleich oder zumindest ähnlich.

Bei einem bevorzugten Ausführungsbeispiel der Gewebeanordnung weist die Funktionsschicht, insbesondere mit der ersten Lage und/oder der mindestens einen zweiten Lage und/oder der Basislage, zumindest bereichsweise eine Dicke von mindestens 1 mm bis höchstens 20 mm, vorzugsweise bis höchstens 15 mm, vorzugsweise bis höchstens 10 mm, vorzugsweise eine Dicke von 1 mm, oder 1,5 mm, oder 3 mm, oder 5 mm, oder 7 mm, oder 10 mm auf.

Bei einem bevorzugten Ausführungsbeispiel der Gewebeanordnung weisen die erste und/oder die mindestens eine zweite Lage der Funktionsschicht mindestens einen weiteren Bestandteil auf, welcher ausgewählt ist aus einer Gruppe bestehend aus Farbpigmenten, Baumwollpulver, Baumwollflocken, Metallpulver, metallischem Pulver, Kunststoffpulver, Kunststoffgranulat, einem magnetischen Material, Glaspulver, Sand, einem elektrisch leitenden Material, einer elektrischen und/oder elektronischen Schaltung, und einem wärmeleitenden Material.

Bei einem bevorzugten Ausführungsbeispiel der Gewebeanordnung umgibt die erste und/oder die mindestens eine zweite Lage der Funktionsschicht mindestens ein Element zumindest teilweise, welches ausgewählt ist aus einer Gruppe bestehend aus einem Magnet, einem Draht, einem Seil, einem hitzebeständigen Bauteil, einer elektrischen und/oder elektronischen Schaltung, einer LED, und einem Sensor.

Bei einem bevorzugten Ausführungsbeispiel der Gewebeanordnung ist auf der dem Gewebe gegenüberliegenden Seite der Funktionsschicht mindestens ein weiteres Gewebe auf der Funktionsschicht aufgebracht. Alternativ oder zusätzlich ist vorzugsweise mindestens ein weiteres Gewebe innerhalb der Funktionsschicht angeordnet, wobei das mindestens eine weitere Gewebe insbesondere eine erste und eine zweite Lage der Funktionsschicht verbindet. Im Fall der Anordnung mehrerer weiterer Gewebe innerhalb der Funktionsschicht sind die mehreren weiteren Gewebe jeweils insbesondere durch voneinander verschiedene Lagen der Funktionsschicht zumindest bereichsweise miteinander verbunden. Durch Verwendung weiterer Gewebe ist es insbesondere möglich, die Eigenschaften der erfindungsgemäßen Gewebeanordnung zu variieren und an deren spezifische Anforderungen anzupassen.

Bei einem bevorzugten Ausführungsbeispiel der Gewebeanordnung weisen das Basisdruckgemisch, das erste Druckgemisch und das zweite Druckgemisch jeweils eine Zusammensetzung auf, wobei mindestens zwei der jeweiligen Zusammensetzungen voneinander verschieden sind. Vorzugsweise weist das Basisdruckgemisch eine Basiszusammensetzung auf, wobei das erste Druckgemisch eine erste Zusammensetzung aufweist, und wobei das zweite Druckgemisch eine zweite Zusammensetzung aufweist. Vorzugsweise sind mindestens zwei voneinander verschiedene Elemente, welche jeweils ausgewählt sind aus einer Gruppe bestehend aus der Basiszusammensetzung, der ersten Zusammensetzung, und der zweiten Zusammensetzung, hinsichtlich ihrer Zusammensetzung voneinander verschieden. Eine Verschiedenheit der Zusammensetzungen der angesprochenen Art voneinander ergibt sich vorzugsweise hinsichtlich einer Identität enthaltener Bestandteile und/oder der Anteile darin enthaltener Bestandteile. Bei einem weiteren bevorzugten Ausführungsbeispiel der Gewebeanordnung weisen das Basisdruckgemisch, das erste Druckgemisch und das zweite Druckgemisch jeweils die gleiche Zusammensetzung, insbesondere die gleichen Bestandteile und die gleichen Anteile dieser Bestandteile auf. Durch die spezifische Zusammensetzung des Basisdruckgemischs, des ersten Druckgemischs und des zweiten Druckgemischs können die Eigenschaften der Gewebeanordnung vorteilhaft an die Anforderungen einer spezifischen Anwendung angepasst werden.

Es wird ein Ausführungsbeispiel der Gewebeanordnung bevorzugt, das sich dadurch auszeichnet, dass eine Oberfläche des Gewebes auf einer zweiten, der ersten Seite gegenüberliegenden Seite des Gewebes in einem der Funktionsschicht gegenüberliegenden Bereich konkav gewölbt ausgebildet ist. Die durch die konkave Ausbildung entstandenen Zwischenräume und Kammern können in vorteilhafter Weise zusammengedrückt werden, wobei eine zusätzliche dämpfende Wirkung der Funktionsschicht erzeugt wird. Insgesamt kann durch die konkav gewölbte Ausbildung des Gewebes eine Dehnbarkeit desselben gesteigert werden.

Insbesondere nimmt die Dehnbarkeit mit zunehmender konkav gewölbter Ausbildung zu, während sie mit abnehmender konkav gewölbter Ausbildung abnimmt.

Es wird ein Ausführungsbeispiel der Gewebeanordnung bevorzugt, das sich dadurch auszeichnet, dass die Funktionsschicht in mindestens zwei Segmente aufgeteilt ist, welche sich jeweils über verschiedene Bereiche der ersten Seite des Gewebes erstrecken. Die mindestens zwei Segmente sind bevorzugt jeweils durch einen Steg miteinander verbunden, wobei im Bereich des Steges eine Dicke der Funktionsschicht - gegebenenfalls bis auf Null - verringert ist. Vorzugsweise weist jedes der mindestens zwei Segmente jeweils einen konkav gewölbten Bereich auf, welcher auf der Oberfläche des Gewebes jeweils auf der zweiten Seite des Gewebes jeweils in einem den mindestens zwei Segmenten der Funktionsschicht gegenüberliegenden Bereich ausgebildet ist. Besonders bevorzugt weisen die mindestens zwei Segmente jeweils eine gleiche Form auf. Vorzugsweise weisen die mindestens zwei Segmente jeweils eine solche Form auf, welche insbesondere in Kombination miteinander eine vorzugsweise vollständige Bedeckung des Gewebes mittels der Segmente der Funktionsschicht ermöglicht. Die Segmente können jeweils eine beliebige Form aufweisen, wobei sie vorzugsweise mehreckig ausgebildet sind. Besonders bevorzugt ergibt sich aus den mindestens zwei Segmenten ein gleichmäßiges Muster der Funktionsschicht.

Vorzugsweise ist/sind im Bereich des Stegs jeweils die Basislage und/oder die erste Lage und/oder die mindestens eine zweite Lage der Funktionsschicht aufgebracht. Die Funktionsschicht ist dann insbesondere insoweit durchgängig auf dem Gewebe aufgebracht, als der Steg jeweils lediglich eine Verringerung der Dicke der Funktionsschicht darstellt.

Bei einem weiteren bevorzugten Ausführungsbeispiel des Gewebes sind die mindestens zwei Segmente jeweils durch einen Steg miteinander verbunden, wobei im Bereich des Steges keine Basislage, keine erste Lage, und/oder keine zweite Lage der Funktionsschicht aufgebracht ist. Insbesondere sind die Stege dann jeweils nur durch das Gewebe selbst ausgebildet, wobei die auf dem Gewebe aufgebrachte Funktionsschicht dann als insbesondere unterbrochene Funktionsschicht ausgebildet ist. Durch die Segmentierung der Funktionsschicht ist es insbesondere möglich, die Dehnbarkeit des Gewebes den Anforderungen entsprechend flexibel zu gestalten, wobei auch eine von einer Dehnrichtung abhängige verschiedene Dehnbarkeit des Gewebes realisiert werden kann.

Die Aufgabe wird insbesondere auch gelöst, indem ein Verfahren zum Herstellen einer Gewebeanordnung mit einem Gewebe und mit einer aufgeschäumten Funktionsschicht geschaffen wird. Besonders bevorzugt wird mittels des Verfahrens eine Gewebeanordnung nach einem der zuvor beschriebenen Ausführungsbeispiele geschaffen. In einem ersten Schritt wird eine erste Lage der Funktionsschicht mit einem ersten Druckgemisch auf einem Gewebe auf einer ersten Seite desselben aufgebracht. Das erste Druckgemisch weist einen Schaum und einen eine Dehnbarkeit der Funktionsschicht steigernden Flexibilitätszusatz auf. Der Schaum weist ein Bindemittel und eine Vielzahl von in dem Bindemittel gebundenen mit Gas gefüllten Kunststoffkugeln auf. Der Flexibilitätszusatz weist ein Acrylsäureester-Copolymer auf. In einem zweiten Schritt wird die erste Lage der Funktionsschicht getrocknet. In einem dritten Schritt wird das Gewebe mit der Funktionsschicht durch Erwärmen desselben thermisch fixiert und aktiviert. Das Gewebe und die erste Lage der Funktionsschicht werden dabei dauerhaft miteinander verbunden. Die Kunststoffkugeln werden durch das Erwärmen des darin befindlichen Gases expandiert, wobei die erste Lage der Funktionsschicht dauerhaft aufgeschäumt wird. Im Rahmen des Verfahrens ergeben sich insbesondere die Vorteile, die bereits in Zusammenhang mit der Gewebeanordnung erläutert wurden.

Als Gewebe wird vorzugsweise ein Textil verwendet. Als Bindemittel werden vorzugsweise Polyurethane verwendet. Die Kunststoffkugeln sind vorzugsweise mit einem Gas gefüllt, welches sich bei Wärmezufuhr ausdehnt. Die Kunststoffkugeln weisen vorzugsweise Polymerhüllen auf, welche insbesondere gedehnt werden können. Als Flexibilitätszusatz wird ein Acrylsäureester-Copolymer verwendet, welches vorzugsweise mit Polyacrylsäure vermischt, insbesondere abgemischt wird. Vorzugsweise wird der Flexibilitätszusatz in einer solchen Menge dem Schaum zugemischt, dass der Flexibilitätszusatz einen Massenanteil von mindestens 7 % bis höchstens 15 % an dem Druckgemisch, insbesondere dem ersten und/oder einem im Rahmen des erfindungsgemäßen Verfahrens verwendeten weiteren Druckgemisch, insbesondere einem zweiten Druckgemisch oder Basisdruckgemisch, aufweist. Vorzugsweise wird für die Vermischung des angesprochenen Druckgemischs ein Hochgeschwindigkeitsrührer verwendet, um insbesondere ein blasenfreies Druckgemisch zu erhalten.

Bei einer bevorzugten Ausführungsform des Verfahrens wird die erste Lage der Funktionsschicht mittels eines Flachdruckverfahrens auf das Gewebe aufgetragen. Insbesondere wird hierbei das erste Druckgemisch über eine bevorzugt auf dem Gewebe angeordnete Maske, vorzugsweise ein Sieb oder eine Schablone, auf das Gewebe aufgetragen. Die Maske weist vorzugsweise Kunststoff, Aluminium, Stahl, oder Edelstahl auf, oder besteht aus Kunststoff, Aluminium, Stahl, oder Edelstahl. Ein solches Flachdruckverfahren ist insbesondere auch als Durchdruckverfahren bekannt. Vorzugsweise wird in analoger Weise eine Basislage der Funktionsschicht auf das Gewebe aufgetragen. Weiterhin wird vorzugsweise in analoger Weise die erste Lage auf der Basislage aufgebracht, wobei die Maske dann vorzugsweise auf die Basislage aufgelegt wird. Weiterhin wird vorzugsweise in analoger Weise mindestens eine zweite Lage der Funktionsschicht aufgetragen, wobei die mindestens eine zweite Lage insbesondere auf die erste Lage aufgebracht wird, und wobei die Maske dann vorzugsweise auf die erste Lage aufgelegt wird.

Bei einer bevorzugten Ausführungsform des Verfahrens wird die erste Lage der Funktionsschicht mittels einer auf dem Gewebe angeordneten Schablone auf das Gewebe aufgebracht. Vorzugsweise ist die Schablone aus rostfreiem Stahl, insbesondere V2A, ausgebildet. Vorzugsweise ist die Höhe der Schablone auf eine Auftragshöhe der ersten Lage der Funktionsschicht abgestimmt. Bevorzugt wird die Schablone mittels Laserschneiden hergestellt. Besonders bevorzugt werden mittels der Schablone Muster, Strukturen, Passmarken, Schriftzeichen, oder andere Markierungen in die erste Lage und/oder weitere im Rahmen des erfindungsgemäßen Verfahrens hergestellte Lagen der Funktionsschicht, insbesondere mindestens eine zweite Lage oder Basislage, eingebracht. Vorzugsweise weist die Schablone mehrere Ausschnitte auf, wodurch insbesondere ein zusammenhängendes Muster und/oder eine zusammenhängende Struktur der Funktionsschicht realisiert werden. Insbesondere werden auf diese Weise mehrere Segmente der Funktionsschicht erzeugt. Zwischen den Ausschnitten angeordnete Ausschnittsbegrenzungen weisen vorzugsweise eine Breite von mindestens 1 mm, besonders bevorzugt von mindestens 2,5 mm auf. Mittels dieser Ausschnittsbegrenzungen werden insbesondere Stege zwischen voneinander verschiedenen Segmenten der Funktionsschicht realisiert. Vorzugsweise weisen die Ausschnitte scharfe Kanten auf, welche insbesondere ein Festsetzen des ersten Druckgemischs oder weiterer im Rahmen des erfindungsgemäßen Verfahrens verwendeter Druckgemische erschwert, wobei insbesondere ein sauberes Druckbild erreicht wird. Die Schablone weist vorzugsweise ein hohes Eigengewicht und eine hohe Steifigkeit auf, wodurch insbesondere ein gleichmäßiger und guter Andruck derselben auf dem Gewebe realisiert wird. Insbesondere wird dadurch ein Verrutschen der Schablone auf dem Gewebe erschwert. Vorzugsweise weist die Schablone einen breiten Rand auf, welcher insbesondere die Ausschnitte der Schablone vorzugsweise flächig umgibt, wobei der Rand die Stabilität der Schablone vorteilhaft steigert. Dieser Rand ist insbesondere für eine gute Einarbeitung des ersten Druckgemischs und/oder der weiteren Druckgemische vorteilhaft.

Das erste Druckgemisch wird insbesondere auf einem oberen Ende des Rands der Schablone verteilt. Mit einer Rakel wird dann vorzugsweise das erste Druckgemisch von dem oberen Ende des Rands aus über die Schablone gezogen, wobei die Ausschnitte der Schablone mit dem ersten Druckgemisch gefüllt werden. Wird nach dem Aufbringen des ersten Druckgemischs auf dem Gewebe die Schablone von dem Gewebe abgenommen, kann insbesondere ein überschüssiger Rest des ersten Druckgemischs an dem vorzugsweise flächigen Bereich des Randes der Schablone haften bleiben, insbesondere ohne ein Druckbild auf dem Gewebe zu beeinträchtigen. Bei einer vorteilhaften Ausgestaltung des Verfahrens bleibt eine auf dem Gewebe aufliegende Unterseite der Schablone, welche in vorteilhafter Weise flächig ausgebildet ist, frei von dem ersten Druckgemisch, wobei ein sauberes Druckbild erzeugt werden kann.

Vorzugsweise wird in analoger Weise eine Basislage der Funktionsschicht auf das Gewebe aufgetragen. Weiterhin wird vorzugsweise in analoger Weise die erste Lage auf die Basislage aufgebracht, wobei die Schablone dann vorzugsweise auf die Basislage aufgelegt wird. Weiterhin wird vorzugsweise in analoger Weise mindestens eine zweite Lage der Funktionsschicht aufgetragen, wobei die mindestens eine zweite Lage insbesondere auf die erste Lage aufgebracht wird, und wobei die Schablone dann vorzugsweise auf die erste Lage aufgelegt wird. Die genannten Vorteile ergeben sich dabei in entsprechender Weise.

Die Schablone ist insbesondere unempfindlich gegenüber Wasser oder wässrigen Substanzen, was bei einem Aufbringen von Druckgemischen auf Wasserbasis vorteilhaft ist. Eine mehrfache Verwendung der Schablone zum Aufbringen des ersten Druckgemischs und weiterer im Rahmen des erfindungsgemäßen Verfahrens verwendeter Druckgemische, welche insbesondere auf bereits auf das Gewebe aufgebrachte Lagen der Funktionsschicht aufgebracht werden, ist ohne weiteres möglich. Mittels der oben beschriebenen Schablone werden vorzugsweise mehrere Lagen der Funktionsschicht auf das Gewebe aufgebracht. Die Schablone wird dazu jeweils vor dem Aufbringen einer Lage der Funktionsschicht insbesondere in einen sauberen, trockenen und fettfreien Zustand gebracht.

Es ist bevorzugt vorgesehen, mittels einer insbesondere die Maske führenden Druckeinrichtung die Lagen der Funktionsschicht aufzubringen. Vorzugsweise wird die Maske bei einer solchen Druckeinrichtung in eine Führungseinrichtung eingespannt. Vorzugsweise ist die Maske mit verschiedenen Druckeinrichtungen kompatibel ausgebildet. Eine Verwendung geeigneter Druckeinrichtungen kann das Aufbringen der Funktionsschicht beschleunigen und die Qualität eines solchen Prozesses steigern.

Es ist bevorzugt vorgesehen, eine Funktionsschicht einer erfindungsgemäßen Gewebeanordnung durch Aneinanderreihen mehrerer Segmente oder Gruppen von Segmenten der Funktionsschicht zu erzeugen, wobei derartige Segmente oder Gruppen von Segmenten jeweils mittels einer Maske, vorzugsweise einer Schablone, hergestellt werden. Die Segmente sind dann vorzugsweise jeweils durch einen schmalen Steg miteinander verbunden. Insoweit bestehen in vorteilhafter Weise keine Restriktionen hinsichtlich der Ausdehnung einer Funktionsfläche auf dem Gewebe.

Bei einer anderen bevorzugten Ausführungsform des Verfahrens wird die erste Lage der Funktionsschicht und/oder eine weitere Lage der Funktionsschicht, insbesondere mindestens eine zweite Lage oder eine Basislage, mit einer als Sieb ausgebildeten Maske aufgetragen. Insbesondere werden hierbei diese Lagen der Funktionsschicht jeweils als Siebdruckfilm auf das Sieb aufgebracht.

Bei einer anderen bevorzugten Ausführungsform des Verfahrens wird das Druckgemisch, insbesondere das erste Druckgemisch, ein zweites Druckgemisch, oder ein Basisdruckgemisch, direkt auf das Gewebe oder eine bereits aufgetragene Lage der Funktionsschicht aufgetragen, wobei insbesondere keine Maske verwendet wird.

Vorzugsweise wird das Gewebe mit der fertig aufgebrachten ersten Lage der Funktionsschicht in eine Trockenvorrichtung, insbesondere einen Trockenschrank eingebracht. Es ist insbesondere vorgesehen, dass das Gewebe vor dem Aufbringen der ersten Lage der Funktionsschicht auf einer Druckplatte angeordnet wird, wobei die Druckplatte nach Aufbringen der ersten Lage der Funktionsschicht mit dem Gewebe und der ersten Lage der Funktionsschicht in die Trockenvorrichtung eingebracht wird. Das Gewebe mit der ersten Lage der Funktionsschicht wird vorzugsweise horizontal in der Trockenvorrichtung angeordnet. Werden mehrere Gewebeanordnungen, insbesondere mehrere Druckplatten mit darauf angeordneten Geweben, in der Trockenvorrichtung getrocknet, so werden die mehreren Gewebeanordnungen, insbesondere die mehreren Druckplatten, vorzugsweise vertikal voneinander beabstandet angeordnet. Insbesondere wird in der Trockenvorrichtung ein vorzugsweise kühler Luftzug erzeugt, wodurch die insbesondere nasse erste Lage der Funktionsschicht in vorteilhafter Weise schnell und gleichmäßig getrocknet wird. Insbesondere wird mittels des kühlen Luftzugs ein zu schnelles Trocknen verhindert, wodurch Spannungsrisse in der Funktionsschicht verhindert werden können. Vorzugsweise wird eine Zeitdauer für das Trocknen der ersten Lage der Funktionsschicht in Abhängigkeit von einer Dicke der ersten Lage Funktionsschicht vorgegeben. In analoger Weise wird das Gewebe mit mindestens einer, insbesondere auf der ersten Lage, fertig aufgebrachten zweiten Lage der Funktionsschicht oder einer fertig aufgebrachten Basislage getrocknet. Insbesondere wird ein Trocknen, vorzugsweise gemäß der beschriebenen Art, jeweils nach jedem Aufbringen einer Lage der Funktionsschicht durchgeführt.

Die Gewebeanordnung mit dem Gewebe und mit der ersten Lage der Funktionsschicht wird, nachdem sie insbesondere getrocknet ist, durch Erwärmen thermisch fixiert und aktiviert. Bei einer bevorzugten Ausführungsform des Verfahrens weist die Funktionsschicht - wie im Folgenden noch ausgeführt wird - weitere Lagen auf, wobei dann die Gewebeanordnung mit dem Gewebe und mit der ersten Lage und den weiteren Lagen der Funktionsschicht durch Erwärmen thermisch fixiert und aktiviert wird. Das thermische Fixieren und Aktivieren der Gewebeanordnung mit dem Gewebe und mit der Funktionsschicht durch Erwärmen wird dann mithin insbesondere genau einmal durchgeführt, nämlich vorzugsweise dann, wenn alle Lagen der Funktionsschicht aufgebracht sind.

Das thermische Fixieren und Aktivieren wird vorzugsweise in einem geeigneten Ofen vorgenommen. Das thermische Fixieren und Aktivieren wird vorzugsweise bei einer Temperatur von mindestens 140 °C bis höchstens 170 °C, besonders bevorzugt von mindestens 150 °C bis höchstens 160 °C, durchgeführt. Vorzugsweise wird der Ofen auf die zum Fixieren und Aktivieren ausgewählte Temperatur vorgeheizt. Vorzugsweise beträgt eine Zeitdauer für das thermische Fixieren und Aktivieren vorzugsweise von mindestens 5 min bis höchstens 7 min, vorzugsweise 6 min. Es wird dabei ein Aufschäumen der Funktionsschicht, insbesondere der ersten Lage und/oder der mindestens einen zweiten Lage und/oder der Basislage derselben, bewirkt. Die Funktionsschicht dehnt sich insbesondere bei einer Temperatur ab 140 °C aus. Insbesondere expandiert durch Erwärmen des Druckgemischs, insbesondere des ersten Druckgemischs und/oder des zweiten Druckgemischs und/oder des Basisdruckgemischs, das Gas in den darin befindlichen Kunststoffkugeln, wodurch sich die Hülle der Kunststoffkugeln ausdehnt. Das Gas wird dabei aufgrund der gasdichten Ausgestaltung der Hülle der Kunststoffkugeln in den Kunststoffkugeln gehalten. Mittels des erfindungsgemäßen Verfahrens wird die Funktionsschicht aufgeschäumt, insbesondere ohne dass separate Luft dem Druckgemisch zum Aufschäumen zugemischt wird.

Bei einer bevorzugten Ausführungsform des Verfahrens wird die Funktionsschicht in einen insbesondere vorgeheizten Ofen eingebracht und dort bei einer Temperatur von mindestens 165 °C bis höchstens 170 °C thermisch fixiert und aktiviert. Dabei wird in vorteilhafter Weise eine samtige Oberfläche der Funktionsschicht, insbesondere einer - in Bezug auf das Gewebe - obersten Lage derselben - erzeugt.

Vorzugsweise wird während des Aufschäumens der Funktionsschicht eine Verbindung zwischen dem Gewebe und dem darauf aufgebrachten Druckgemisch, insbesondere dem ersten Druckgemisch oder einem Basisdruckgemisch, zumindest bereichsweise fixiert. Weiterhin wird vorzugsweise jeweils eine Verbindung zwischen benachbarten Lagen der Funktionsschicht, welche insbesondere als erste Lage, als mindestens eine zweite Lage, oder als Basislage ausgebildet sind, bewirkt. Ein Volumen der - vor dem thermischen Fixieren und Aktivieren - noch vergleichsweise dünnen getrockneten Lagen der Funktionsschicht wird durch das Aufschäumen vergrößert. Mittels des thermischen Fixierens und Aktivierens wird in vorteilhafter Weise ein Volumen und eine Festigkeit des mittels des Verfahrens hergestellten Gewebes gemäß einer bestimmungsgemäßen Ausbildung insbesondere in den von der Funktionsschicht bedeckten Bereichen des Gewebes eingestellt.

Das Gewebe mit der Funktionsschicht wird vorzugsweise in einem hängenden Zustand in einen insbesondere vorgeheizten Ofen eingebracht. Hierbei wird das Gewebe vorzugsweise derart in dem Ofen angeordnet, dass angrenzend an die aufgebrachte Funktionsschicht ein Freiraum realisiert wird, was insbesondere bei der Einbringung mehrerer Gewebe in den Ofen vorzugsweise mittels geeigneter Abstandshalteeinrichtungen, welche einen Freiraum zwischen den mehreren Gewebeanordnungen gewährleisten, ermöglicht wird. Hierdurch wird insbesondere eine direkte Wärmeeinleitung in die Funktionsschicht ermöglicht. Die Aufschäumung wird durch das thermische Fixieren und Aktivieren insbesondere nur in der Richtung bewirkt, in welcher sich die Funktionsschicht frei ausdehnen kann, mithin in Richtung der dem Gewebe abgewandten Seite der Funktionsschicht. Vorzugsweise wird durch das insbesondere einseitige Aufschäumen der Funktionsschicht bei einer gegebenen Flexibilität des Gewebes eine Oberfläche des Gewebes auf einer zweiten, der ersten Seite gegenüberliegenden Seite des Gewebes in einem der Funktionsschicht gegenüberliegenden Bereich konkav gewölbt ausgebildet. Je dicker die Funktionsschicht mittels eines Druckgemischs der beschriebenen Art aufgetragen wird, desto stärker wird das Gewebe konkav gekrümmt.

Die Ausprägung der konkaven Wölbung ist weiterhin insbesondere von einem Material des Gewebes, insbesondere einer Steifigkeit desselben, abhängig. Insbesondere fällt eine konkave Ausbildung des Gewebes auf der zweiten Seite desselben bei dünnen und leichten Geweben stärker aus. Bei einer Verwendung dickerer und steiferer Gewebe fällt hingegen eine konkave Ausbildung des Gewebes geringer aus. Das Gewebe wirkt quasi wie eine Armierung, welche die Funktionsschicht in einer bestimmten Position und Form hält. Es können somit in vorteilhafter Weise verschiedene Effekte insbesondere durch Variation von Dicke, Zusammensetzung und Segmentierung der Funktionsschicht, sowie durch Variation des Gewebes erzeugt werden.

Die Funktionsschicht bleibt nach dem Aufschäumen verformbar, insbesondere solange sie noch heiß ist. Vorzugsweise wird die Gewebeanordnung mit dem Gewebe und mit der Funktionsschicht nach dem thermischen Fixieren und Aktivieren in eine gewünschte Form gepresst oder gezogen, wobei diese Form insbesondere bis zu einem Erkalten der Funktionsschicht gehalten wird. Ist die Funktionsschicht abgekühlt, so behält die Gewebeanordnung diese Form weitestgehend bei. Das Pressen oder Ziehen der Gewebeanordnung in eine gewünschte Form kann insbesondere im Anschluss an das thermische Fixieren und Aktivieren mehrfach wiederholt werden.

Vorzugsweise wird mittels des thermischen Fixierens und Aktivierens eine dauerhafte Verbindung des Gewebes mit der Funktionsschicht realisiert, sodass das Gewebe mit der Funktionsschicht ohne weiteres mechanisch und/oder thermisch belastet werden kann, ohne dass sich insbesondere die Verbindung löst. Insbesondere ist ein Waschen des Gewebes mit der Funktionsschicht möglich, wobei eine Waschtemperatur bis zu 90 °C betragen kann.

Durch den Flexibilitätszusatz werden Spannungsrisse in der Funktionsschicht durch das Trocknen und/oder das thermische Fixieren und Aktivieren des Gewebes mit der Funktionsschicht in vorteilhafter Weise verhindert.

Vorzugsweise weist die Funktionsschicht nach dem thermischen Fixieren und Aktivieren des Gewebes mit der Funktionsschicht zumindest bereichsweise eine Dicke von mindestens 1 mm bis höchstens 20 mm, vorzugsweise bis höchstens 15 mm, vorzugsweise bis höchstens 10 mm, vorzugsweise eine Dicke von 1 mm, oder 1,5 mm, oder 3 mm, oder 5 mm, oder 7 mm, oder 10 mm auf.

Bei einer bevorzugten Ausführungsform des Verfahrens wird das erste Druckgemisch und/oder ein weiteres im Rahmen des erfindungsgemäßen Verfahrens verwendetes Druckgemisch, insbesondere ein zweites Druckgemisch oder ein Basisdruckgemisch, mit mindestens einem weiteren Bestandteil vermischt, welcher ausgewählt ist aus einer Gruppe bestehend aus Farbpigmenten, Baumwollpulver, Baumwollflocken, einem Metallpulver, einem metallischen Pulver, einem Kunststoffpulver, einem Kunststoffgranulat, einem magnetischen Material, Glaspulver, Sand, einem elektrisch leitenden Material, einer elektrischen und/oder elektronischen Schaltung, und einem wärmeleitenden Material. Insbesondere können mittels eines solchen weiteren Bestandteils die Festigkeit, Optik und/oder Haptik der Funktionsschicht variiert werden.

Es wird eine Ausführungsform des Verfahrens bevorzugt, die sich dadurch auszeichnet, dass dem ersten Druckgemisch ein Schaumadditiv zugemischt wird, welches ein aliphatisches Polyesterurethan umfasst. Vorzugsweise umfassen weitere im Rahmen des Verfahrens verwendete Druckgemische, insbesondere ein zweites Druckgemisch oder ein Basisdruckgemisch, ebenfalls das Schaumadditiv. Insbesondere wird durch Erhöhen eines Massenanteils des Schaumadditivs an dem Druckgemisch der Funktionsschicht ein Ausdehnen der Kunststoffkugeln aufgrund der Erwärmung im Rahmen des thermischen Fixierens und Aktivierens, mithin eine Vergrößerung des Volumens der Funktionsschicht, verringert. Durch Verringern des Massenanteils des Schaumadditivs an dem Druckgemisch der Funktionsschicht wird insbesondere ein stärkeres Ausdehnen der Kunststoffkugeln durch das thermische Fixieren und Aktivieren, mithin eine Vergrößerung des Volumens der Funktionsschicht, bewirkt. Insbesondere wird ein maximales Ausdehnen der Kunststoffkugeln, insbesondere eine maximale Vergrößerung des Volumens der Funktionsschicht, bewirkt, wenn kein Schaumadditiv dem Druckgemisch der Funktionsschicht zugemischt wird.

Bei einer bevorzugten Ausführungsform des Verfahrens werden bei der Herstellung des Druckgemischs der Schaum und das Schaumadditiv in einem Massenverhältnis von 1:1 miteinander vermischt, wobei der Flexibilitätszusatz mit einem Massenanteil von 10 % der Masse dieses Gemischs dem Schaum und dem Schaumadditiv zugemischt wird. Eine solche Zusammensetzung führt insbesondere zu einem ausgewogenen Maß an Aushärtung und Aufschäumung der Funktionsschicht.

Bei einer weiteren bevorzugten Ausführungsform des Verfahrens werden bei der Herstellung des Druckgemischs der Schaum und das Schaumadditiv in einem Massenverhältnis von 1:4 miteinander vermischt, wobei der Flexibilitätszusatz mit einem Massenanteil von 10 % der Masse dieses Gemischs dem Schaum und dem Schaumadditiv zugemischt wird. In einer solchen Zusammensetzung weist die Funktionsschicht insbesondere eine verringerte Steifigkeit und einen verringerten dämpfenden Effekt auf.

Bei einer weiteren bevorzugten Ausführungsform des Verfahrens wird bei der Herstellung des Druckgemischs kein Schaumadditiv dem Schaum und dem Flexibilitätszusatz zugemischt. In diesem Fall wird insbesondere ein maximales Aufschäumen der Funktionsschicht realisiert. Durch Variation des Massenanteils des Schaumadditivs in dem Druckgemisch kann somit ein Aufschäumgrad der Funktionsschicht in einem bestimmten Bereich eingestellt werden.

Erfindungsgemäß wird der Flexibilitätszusatz mit einem Massenanteil von mindestens 7 % bis höchstens 15 % an dem ersten Druckgemisch beigemischt. Optional wird der Flexibilitätszusatz zusätzlich mit einem Massenanteil von mindestens 7 % bis höchstens 15 % an einem weiteren im Rahmen des erfindungsgemäßen Verfahrens verwendeten Druckgemisch beigemischt. Bei einem solchen Massenanteil wird insbesondere die Bildung von Spannungsrissen in der Funktionsschicht sicher vermieden.

Bei einer bevorzugten Ausführungsform des Verfahrens wird mindestens ein Element in die Funktionsschicht eingesetzt, sodass es von dieser zumindest teilweise umgriffen, insbesondere festgehalten wird. Das mindestens eine Element ist ausgewählt aus einer Gruppe bestehend aus einem Magnet, einem Draht, einem Seil, einem hitzebeständigen Bauteil, einer elektrischen und/oder elektronischen Schaltung, einer LED, und einem Sensor. Vorzugsweise wird das mindestens eine Element nach dem Auftragen der ersten oder einer weiteren Lage der Funktionsschicht in dieselbe eingesetzt. Insbesondere wird die auf das Gewebe aufgebrachte erste oder weitere Lage der Funktionsschicht, unmittelbar nach deren Auftragen, vorzugsweise für 10 min bei einer Temperatur von vorzugsweise 20 °C gehalten, wobei die frisch aufgebrachte Lage der Funktionsschicht vorzugsweise oberflächlich so lange feucht bleibt. In die noch feuchte Lage der Funktionsschicht wird das mindestens eine Element eingesetzt. Nach dem thermischen Fixieren und Aktivieren ist das mindestens eine angesprochene Element durch die Funktionsschicht fest und sicher eingespannt.

Es wird eine Ausführungsform des Verfahrens bevorzugt, die sich dadurch auszeichnet, dass das Gewebe vor dem Aufbringen der ersten Lage der Funktionsschicht auf einer Druckplatte fest angeordnet wird. Das Gewebe bleibt vorzugsweise zumindest bis zum Trocknen der ersten Lage der Funktionsschicht auf der Druckplatte angeordnet. Besonders bevorzugt bleibt das Gewebe bis zum Trocknen der letzten aufgebrachten, insbesondere obersten Lage der Funktionsschicht auf der Druckplatte angeordnet. Vorzugsweise weist die Druckplatte eine glatte Oberfläche auf, auf welcher das Gewebe insbesondere faltenfrei angeordnet wird. Bei einer bevorzugten Ausführungsform des Verfahrens erfolgt das Anordnen des Gewebes auf der Druckplatte mittels eines insbesondere wieder zu entfernenden Textilklebers. Besonders bevorzugt wird ein Textilkleber verwendet, welcher insbesondere mittels eines Bügeleisens thermisch fixiert wird, wodurch eine Haftung des Gewebes auf der Druckplatte zusätzlich erhöht wird. Die Druckplatte ist vorzugsweise mit einer planen Oberfläche ausgebildet, welche vorzugsweise abwaschbar ist. Das Format der Druckplatte entspricht vorzugsweise mindestens der Größe der später verwendeten Maske, insbesondere der Schablone oder des Siebes.

Die Druckplatte wird vorzugsweise, insbesondere mit dem darauf aufgebrachten Gewebe mit zumindest einer zu trocknenden Lage der Funktionsschicht, in die Trockenvorrichtung eingeschoben. Aufgrund der festen Anordnung des Gewebes auf der Druckplatte wird in vorteilhafter Weise eine gleichmäßige Ausbildung der Funktionsschicht auf dem Gewebe gewährleistet, wobei ein gleichmäßiges Aufschäumen bei dem thermischen Fixieren und Aktivieren sichergestellt werden kann. Ein unregelmäßiges Aufschäumen könnte beispielsweise durch Verwerfungen des Gewebes verursacht werden. Eine solche Verwerfung kann beispielsweise durch das Trocknen und den daraus resultierenden Volumenverlust des trocknenden Druckgemischs entstehen.

Es wird eine Ausführungsform des Verfahrens bevorzugt, die sich dadurch auszeichnet, dass nach dem Aufbringen des Gewebes auf der Druckplatte und zusätzlich oder alternativ - insbesondere unmittelbar - vor dem Aufbringen der ersten Lage der Funktionsschicht auf dem Gewebe eine Basislage der Funktionsschicht mit einem Basisdruckgemisch auf der ersten Seite des Gewebes auf das Gewebe aufgebracht wird. Die Basislage der Funktionsschicht weist vorzugsweise eine Dicke auf, welche geringer ist als eine Dicke der ersten Lage der Funktionsschicht. Vorzugsweise wird anschließend die Basislage der Funktionsschicht getrocknet. Auf die getrocknete Basislage der Funktionsschicht wird dann insbesondere die erste Lage der Funktionsschicht aufgebracht. Vorzugsweise werden durch das thermische Fixieren und Aktivieren das Gewebe die Basislage der Funktionsschicht und die erste Lage der Funktionsschicht dauerhaft miteinander verbunden.

Als Basisdruckgemisch wird vorzugsweise ein Druckgemisch verwendet, welches zumindest den Schaum und/oder den Flexibilitätszusatz aufweist. Besonders bevorzugt wird die Basislage der Funktionsschicht mittels einer als Sieb ausgebildeten Maske aufgebracht. Insbesondere aufgrund einer im Vergleich zu einer Dicke der ersten Lage der Funktionsschicht deutlich geringeren Dicke der Basislage ist es möglich, das Basisdruckgemisch besonders tief in das Gewebe hineinzudrücken. Insbesondere ist aufgrund einer geringeren Auftragshöhe des Basisdruckgemischs auf dem Gewebe ein Abstand zwischen einer insbesondere für das Aufbringen der Basislage verwendeten Rakel zu dem Gewebe besonders gering, sodass eine besonders hohe Flächenpressung mittels der Rakel auf das Gewebe aufgebracht werden kann, wodurch das Basisdruckgemisch besonders tief in das Gewebe hineingedrückt wird. Hierdurch wird insbesondere ein Haften der Basislage auf dem Gewebe verstärkt, was in vorteilhafter Weise ein Haften der gesamten Funktionsschicht auf dem Gewebe verstärkt. Weiterhin wird mittels der Basislage insbesondere verhindert, dass Feuchtigkeit aus der ersten Lage der Funktionsschicht in das Gewebe eindringen kann, wodurch insbesondere die Qualität des Gewebes beeinträchtigt wird. Insoweit fungiert die Basislage als eine Art Sperrschicht, welche vorzugsweise die Oberfläche auf der ersten Seite des zu bedruckenden Gewebes verschließt und ein Auswässern der auf der Basislage aufgebrachten Funktionsschicht verhindert. Somit können insbesondere auch besondere dünne, empfindliche Gewebe mit der Funktionsschicht versehen werden. Durch Verhindern eines Feuchtigkeitseintrags der Funktionsschicht in das Gewebe wird zudem verhindert, dass ein bestimmungsgemäßer Ablauf des Verfahrens aufgrund eines dadurch verringerten Feuchtigkeitsgehalts der Funktionsschicht beeinträchtigt wird. Mittels der Basislage kann zudem das Gewebe zumindest teilweise windundurchlässig und/oder wasserundurchlässig ausgebildet werden.

Vorzugsweise wird das Aufbringen der Basislage der Funktionsschicht im Siebdruckverfahren durchgeführt. Ein hierfür verwendetes Sieb weist vorzugsweise eine Vorlage für das Aufbringen der Basislage auf, wobei es vorzugsweise mit der Vorlage für das Aufbringen der Basislage angelegt und belichtet ist. Vorzugsweise sind in die Vorlage bereits graphische Informationen zu dem späteren Produkt eingebracht. Beispielsweise können dadurch Angaben bezüglich einer Kontur, Naht- oder Faltkanten, Positionen, Passmarken, einer Schrift, oder eines Musters in die Basislage ein- und/oder aufgedruckt werden.

Nachdem die Basislage der Funktionsschicht aufgebracht ist, wird, insbesondere nach einer Trocknung derselben, die erste Lage der Funktionsschicht auf der Basislage aufgebracht. Das Aufbringen der ersten Lage der Funktionsschicht auf der Basislage wird insbesondere in analoger Weise zu den bereits ausgeführten bevorzugten Ausführungsformen des Verfahrens durchgeführt.

Bei einer bevorzugten Ausführungsform des Verfahrens wird dem Basisdruckgemisch ein Härter zugemischt, wodurch eine Benetzbarkeit des Gewebes und die Haftungseigenschaften der Funktionsschicht, insbesondere der Basislage, auf dem Gewebe weiter verbessert werden.

Das Trocknen der ersten Lage der Funktionsschicht, welche auf der getrockneten Basislage der Funktionsschicht aufgebracht ist, wird vorzugsweise analog zu den bereits ausgeführten bevorzugten Ausführungsformen des Verfahrens in Zusammenhang mit dem Trocknen der unmittelbar auf das Gewebe aufgebrachten ersten Lage der Funktionsschicht durchgeführt.

Vorzugsweise wird das thermische Fixieren und Aktivieren des Gewebes mit zumindest der Basislage und der ersten Lage der Funktionsschicht analog zu den bereits beschriebenen bevorzugten Ausführungsformen des Verfahrens durchgeführt.

Es wird eine Ausführungsform des Verfahrens bevorzugt, sie sich dadurch auszeichnet, dass nach dem Trocknen der ersten Lage der Funktionsschicht mindestens eine zweite Lage der Funktionsschicht mit einem zweiten Druckgemisch, welches zumindest den Schaum und den Flexibilitätszusatz aufweist, auf die erste Lage der Funktionsschicht aufgebracht wird. Vorzugsweise wird anschließend die mindestens eine zweite Lage der Funktionsschicht getrocknet. Vorzugsweise werden mehrere zweite Lagen der Funktionsschicht insbesondere aufeinander aufgetragen, wobei jeweils nach einem Auftragen einer jeden der mehreren zweiten Lagen ein Trocknen der zuletzt aufgetragenen Lage durchgeführt wird.

Insbesondere werden durch das thermische Fixieren und Aktivieren die erste und die mindestens eine zweite Lage der Funktionsschicht dauerhaft miteinander verbunden, wobei die in dem zweiten Druckgemisch in dem Schaum enthaltenen Kunststoffkugeln durch das Erwärmen des darin befindlichen Gases expandiert werden, und wobei die mindestens eine zweite Lage der Funktionsschicht dauerhaft aufgeschäumt wird.

Durch Herstellen der Funktionsschicht mit mehr als einer Lage kann in vorteilhafter Weise ein Trocknen der Funktionsschicht besonders effizient und sicher durchgeführt werden, da jeweils nur eine vergleichsweise geringe Menge an Feuchtigkeit aus der Funktionsschicht entweichen muss, wodurch eine Zeitdauer für die Trocknung verringert werden kann. Eine Zeitdauer für das Trocknen einer Lage der Funktionsschicht der beschriebenen Art ist insbesondere abhängig von einer Auftragshöhe derselben und/oder einer Zusammensetzung des für die Lage verwendeten Druckgemischs.

Das Aufbringen der mindestens einen zweiten Lage der Funktionsschicht wird vorzugsweise analog zu dem bereits ausgeführten Aufbringen der ersten Lage der Funktionsschicht durchgeführt, wobei die mindestens eine zweite Lage insbesondere auf die erste Lage aufgebracht wird. Vorzugsweise wird die mindestens eine zweite Lage der Funktionsschicht mittels der gleichen Maske, insbesondere Schablone, aufgebracht, wie die erste Lage der Funktionsschicht. Es ist aber insbesondere möglich, dass das Aufbringen der mindestens einen zweiten Lage der Funktionsschicht gegenüber dem Aufbringen der ersten Lage der Funktionsschicht verändert wird.

Insbesondere wird durch das thermische Fixieren und Aktivieren eine homogene Struktur der ersten und der mindestens einen zweiten Lage der Funktionsschicht erzeugt. Insbesondere kann durch Wahl einer Auftragsdicke der ersten und/oder der mindestens einen zweiten Lage der Funktionsschicht eine Steifheit des Gewebes insbesondere in dem mit der Funktionsschicht beschichteten Bereich des Gewebes eingestellt werden, wobei eine Erhöhung der Auftragsdicke zu einer erhöhten Versteifung und eine verringerte Auftragsdicke zu einer verringerten Versteifung des Gewebes führt. Alternativ oder zusätzlich kann durch eine Erhöhung der Anzahl aufeinander aufgebrachter Lagen der Funktionsschicht eine Steifheit des Gewebes, insbesondere in den bedruckten Bereichen, erhöht werden. Es ist in vorteilhafter Weise auch möglich, mehrere Lagen der Funktionsschicht mit insbesondere verschiedenen Dicken, Farben, Zusammensetzungen und/oder anderen Eigenschaften zu realisieren.

Vorzugsweise wird das Gewebe mit der Funktionsschicht nach dem thermischen Fixieren und Aktivieren in einem noch erwärmten Zustand in eine gewünschte Form gepresst oder gezogen, wobei es vorzugsweise bis zum Erkalten in dieser Form gehalten wird. Hierdurch lassen sich verschiedene Ausbildungen des Gewebes mit der aufgeschäumten Funktionsschicht realisieren.

Es wird eine Ausführungsform des Verfahrens bevorzugt, die sich dadurch auszeichnet, dass das Basisdruckgemisch, das erste Druckgemisch und das zweite Druckgemisch jeweils mit einer bestimmten Zusammensetzung bereitgestellt werden, wobei mindestens zwei der jeweiligen bestimmten Zusammensetzungen voneinander verschieden sind. Insbesondere sind mindestens zwei der jeweiligen bestimmten Zusammensetzungen hinsichtlich ihrer Bestandteile und/oder der Anteile ihrer Bestandteile voneinander verschieden.

Vorzugsweise weist das Basisdruckgemisch eine Basiszusammensetzung auf, wobei das erste Druckgemisch eine erste Zusammensetzung aufweist, und wobei das zweite Druckgemisch eine zweite Zusammensetzung aufweist. Vorzugsweise sind mindestens zwei voneinander verschiedene Elemente, welche jeweils ausgewählt sind aus einer Gruppe bestehend aus der Basiszusammensetzung, der ersten Zusammensetzung und der zweiten Zusammensetzung, hinsichtlich ihrer Bestandteile und/oder der Anteile ihrer Bestandteile voneinander verschieden.

Bei einer anderen bevorzugten Ausführungsform des Verfahrens sind das Basisdruckgemisch, das erste Druckgemisch und das zweite Druckgemisch gleich oder einander zumindest ähnlich. Bei wiederum einer anderen bevorzugten Ausführungsform des Verfahrens sind das erste Druckgemisch und das zweite Druckgemisch gleich oder einander zumindest ähnlich, wobei das Basisdruckgemisch von dem ersten Druckgemisch und von dem zweiten Druckgemisch verschieden ist. Entscheidend ist aber letztlich, dass das erste Druckgemisch und das zweite Druckgemisch zumindest den Schaum und den Flexibilitätszusatz aufweisen, wodurch Spannungsrisse in den entsprechenden Lagen verhindert werden können. Durch Abstimmung der Zusammensetzung des Basisdruckgemischs, des ersten Druckgemischs, und/oder des zweiten Druckgemischs wird insbesondere eine Abstimmung der Funktionsschicht auf die Anforderungen an das Gewebe mit der Funktionsschicht gemäß einer bestimmten Anwendung in vorteilhafter Weise vorgenommen.

Es wird eine Ausführungsform des Verfahrens bevorzugt, die sich dadurch auszeichnet, dass das Gewebe mit der Funktionsschicht unmittelbar vor dem thermischen Fixieren und Aktivieren weiterverarbeitet wird. Vorzugsweise wird dann das weiterverarbeitete Gewebe mit der Funktionsschicht thermisch fixiert und aktiviert. Vorzugsweise wird das Gewebe mit der Funktionsschicht nach dem Trocknen der Funktionsschicht weiterverarbeitet. Eine Weiterverarbeitung des Gewebes mit der Funktionsschicht in diesem Zustand ist insbesondere deswegen vorteilhaft, weil nach dem Trocknen die Funktionsschicht an Volumen und Dicke verloren hat und daher leicht verarbeitbar ist. Weiterhin ist die Funktionsschicht in diesem Zustand besonders flexibel, wodurch eine Weiterverarbeitung einfach und sicher möglich ist.

Im Folgenden wird eine bevorzugte Ausführungsform des Verfahrens in Zusammenhang mit der Herstellung einer Tasche dargestellt: Die vorzugsweise mit einer Funktionsschicht versehenen Gewebeteile, insbesondere Textilteile, sowie weitere Teile, beispielsweise Reißverschlüsse oder andere Teile, werden zusammengesetzt und miteinander vernäht. Durch die Platzierung von Nähten lassen sich Eigenschaften der Tasche variieren. Wird die Naht in einem Bereich des Gewebes gesetzt, in welchem keine Funktionsschicht aufgebracht ist oder eine Funktionsschicht lediglich eine geringe Dicke aufweist, so ist insbesondere dieser Bereich auch nach dem thermischen Fixieren und Aktivieren beweglich. Wird die Naht dagegen im Bereich einer Funktionsschicht mit größerer Dicke gesetzt, so kann zwischen den vernähten Teilen nach dem thermischen Fixieren und Aktivieren eine Spannung zueinander aufgebaut werden, was insbesondere zu einer Versteifung dieses Bereichs führt. Die weiterverarbeiteten, insbesondere vernähten Teile der Tasche werden insbesondere in einem Ofen thermisch fixiert und aktiviert, wobei die Funktionsschicht auf den jeweiligen Gewebeteilen der Tasche aufgeschäumt wird.

Das thermische Fixieren und Aktivieren des weiter verarbeiteten Gewebes mit der Funktionsschicht wird insbesondere analog zu dem thermischen Fixieren und Aktivieren nach einer der bereits beschriebenen Ausführungsformen des Verfahrens durchgeführt.

Es wird eine Ausführungsform des Verfahrens bevorzugt, die sich dadurch auszeichnet, dass in das Gewebe mit der Funktionsschicht eine Zugspannung eingebracht wird, welche während des thermischen Fixierens und Aktivierens zumindest zeitweise vorliegt. Vorzugsweise wird in Abhängigkeit von der Zugspannung auf einer zweiten, der ersten Seite gegenüberliegenden Seite des Gewebes in einem der Funktionsschicht gegenüberliegenden Bereich eine dauerhafte konkave Wölbung einer Oberfläche des Gewebes eingestellt. Vorzugsweise wird die Zugspannung vor dem thermischen Fixieren und Aktivieren des Gewebes mit der Funktionsschicht in das Gewebe mit der Funktionsschicht eingebracht. Bevorzugt liegt die Zugspannung während der gesamten thermischen Fixierung und Aktivierung vor.

Insbesondere wird die konkave Wölbung der Oberfläche des Gewebes verstärkt, wenn die Zugspannung verringert wird, wobei insbesondere die konkave Wölbung des Gewebes verringert wird, wenn die Zugspannung erhöht wird.

Für das Aufbringen und Einstellen der Zugspannung wird vorzugsweise ein Rahmen aus einem hitzebeständigen Material verwendet, welcher vorzugsweise Holz oder Metall aufweist oder aus Holz oder Metall besteht. Vorzugsweise wird das mit der Funktionsschicht versehene Gewebe in diesen Rahmen eingebracht, insbesondere darin befestigt. Zur Befestigung wird das Gewebe vorzugsweise an den Rahmen geklemmt, getackert oder daran mit Nadeln befestigt. Auf diese Weise wird effektiv ein Verrutschen des Gewebes in dem Rahmen verhindert. Der Rahmen ist eingerichtet, um eine insbesondere einstellbare, vorzugsweise gleichmäßige Zugspannung in das Gewebe einzubringen. Hierdurch kann ein insbesondere maximales Zusammenziehen des Gewebes beeinflusst werden. Insbesondere wird durch Einstellen einer Höhe der Zugspannung eine Ausprägung der konkaven Wölbung beim Aufschäumen beeinflusst. Nach dem Fixieren und Aktivieren verbleibt das Gewebe mit der Funktionsschicht vorzugsweise bis zu dessen Abkühlung in dem Rahmen, wodurch eine gewünschte Form des Gewebes, insbesondere eine eingestellte konkave Wölbung desselben, insbesondere dauerhaft erhalten werden kann.

Weist das Gewebe eine Funktionsschicht mit mehreren Segmenten auf, so trifft das in Zusammenhang mit einer einzelnen konkaven Wölbung Gesagte in analoger Weise insbesondere für alle konkaven Wölbungen der Oberfläche des Gewebes, welche auf der zweiten Seite des Gewebes jeweils einem der Segmente der Funktionsschicht gegenüberliegen, zu.

Vorzugsweise weist das Gewebe eine bestimmte Flexibilität auf, wodurch eine konkave Wölbung der Oberfläche desselben realisierbar wird. Insbesondere wird in vorteilhafter Weise ein dreidimensionaler Effekt des Gewebes mit der Funktionsschicht durch bewegliche Zwischenräume zwischen Segmenten der Funktionsschicht verstärkt, welche wie Scharniere wirken, und vorzugsweise Außenkanten der Segmente sichtbar machen. Bei einer bevorzugten Ausführungsform des Verfahrens wird eine dauerhafte konkave Wölbung des Gewebes mit der Funktionsschicht beim Aufschäumen eingeschränkt oder verhindert, indem in das Gewebe mit der Funktionsschicht eine hinreichend hohe Zugspannung eingebracht wird.

Es ist insbesondere möglich, auch ohne Ausbilden dauerhafter konkaver Wölbungen in der Oberfläche des Gewebes eine Abzeichnung von Segmenten der Funktionsschicht auf der zweiten Seite des Gewebes zu erzielen. Wird das Gewebe mit der Funktionsschicht nämlich insbesondere im Gebrauch verformt, kann eine dezente Abzeichnung von Segmenten der Funktionsschicht auf der zweiten Seite des Gewebes sichtbar gemacht werden.

Mittels der Ausbildung dauerhafter konkaver Wölbungen der Oberfläche des Gewebes ist in vorteilhafter Weise eine zusätzliche Dehnbarkeit des Gewebes über die konkaven Wölbungen insbesondere bei Einleitung einer Zugkraft realisierbar. Bei einem Nachlassen dieser Zugkraft zieht sich vorzugsweise der gewölbte Bereich des Gewebes infolge einer Rückstellkraft der aufgeschäumten Funktionsschicht in seine ursprüngliche Position zurück. Insbesondere lässt sich ein festeres, steiferes Gewebe erst mit einer dickeren Funktionsschicht konkav wölben, während ein leichteres Gewebe bereits bei einer dünneren Funktionsschicht starke Wölbungen auf der zweiten Seite zeigt.

Es wird eine Ausführungsform des Verfahrens bevorzugt, die sich dadurch auszeichnet, dass auf die erste Lage der Funktionsschicht und/oder die mindestens eine zweite Lage der Funktionsschicht vor dem Trocknen dieser Lage(n) ein oder mehr als ein weiteres Gewebe aufgebracht wird. Vorzugsweise werden durch das thermische Fixieren und Aktivieren diese Lage(n) und das eine oder mehr als eine weitere Gewebe dauerhaft miteinander verbunden.

Insbesondere beträgt eine Wartezeit nach Abschluss des Auftragens der ersten und/oder der mindestens einen zweiten Lage der Funktionsschicht bis zum Aufbringen des einen oder mehr als einen weiteren Gewebes etwa 10 Minuten, wobei vorzugsweise eine Umgebungstemperatur 20 °C beträgt. Zu diesem Zeitpunkt ist die erste und/oder mindestens eine zweite Lage der Funktionsschicht noch nass. Insbesondere in dem noch nassen Zustand der ersten und/oder der mindestens einen zweiten Lage der Funktionsschicht kann sich das Druckgemisch der jeweils obersten, insbesondere noch nassen Lage der Funktionsschicht mit dem aufgebrachten einen oder mehr als einen weiteren Gewebe besonders gut verbinden. Das eine oder mehr als eine weitere Gewebe fungiert dann quasi als eine Art Abdeckung der Funktionsschicht.

Besonders bevorzugt wird das eine oder mehr als eine weitere Gewebe ebenfalls mit einer, ein Basisdruckgemisch der bereits angesprochenen Art aufweisenden Basislage versehen, wodurch insbesondere die Haftungseigenschaften des aufgebrachten einen oder mehr als einen weiteren Gewebes mit der noch nassen jeweils obenliegenden ersten oder mindestens einen zweiten Lage der Funktionsschicht verbessern lassen.

Es kann insbesondere ein Sandwich-Aufbau realisiert werden, wobei zwei oder mehrere weitere Gewebe mittels der Funktionsschicht oder einer Mehrzahl von jeweils zwischen den Geweben angeordneten Funktionsschichten, insbesondere mittels mehrerer Lagen der Funktionsschicht, miteinander verbunden werden. Die aufgetragenen Lagen der Funktionsschicht fungieren hierbei quasi als Kleber und Abstandshalter für die weiteren Gewebe. Insbesondere kann mittels des Sandwich-Aufbaus in vorteilhafter Weise eine erhöhte Steifigkeit des Gewebes mit der Funktionsschicht erreicht werden. Die Flexibilität eines solchen Sandwich-Aufbaus kann insbesondere durch Variation eines weiteren Gewebes verändert werden. Wird beispielsweise ein dehnbareres Gewebe, beispielsweise mit einem hohen Stretch-Anteil, auf einer Seite des Sandwich-Aufbaus verwendet, so wird ein solcher Materialverbund insbesondere auch auf der gegenüberliegenden Seite des Sandwich-Aufbaus flexibler.

Bei einer bevorzugten Ausführungsform des Verfahrens wird auf die erste Lage der Funktionsschicht oder - falls auf die erste Lage der Funktionsschicht bereits weitere Lagen der Funktionsschicht aufgebracht wurden - auf die - in Bezug auf das Gewebe - oberste Lage der Funktionsschicht ein erstes weiteres Gewebe aufgebracht. Bevorzugt wird auf das erste weitere Gewebe mindestens eine weitere Lage der Funktionsschicht aufgebracht, wobei auf die nach Aufbringen der mindestens einen weiteren Lage der Funktionsschicht oberste Lage der Funktionsschicht ein zweites weiteres Gewebe aufgebracht wird. Auf diese Weise können durch verschiedenartige Anordnung von Lagen der Funktionsschicht und mehreren weiteren Geweben beliebige, insbesondere sandwichartige Ausführungen der Gewebeanordnung mit der insbesondere mehrlagigen Funktionsschicht und mit weiteren Geweben erzeugt werden.

Bei einer bevorzugten Ausführungsform des Verfahrens wird die Funktionsschicht derart auf das Gewebe aufgebracht, dass mindestens zwei Segmente der Funktionsschicht entstehen, welche sich jeweils über verschiedene Bereiche der ersten Seite des Gewebes erstrecken. Vorzugsweise sind die mindestens zwei Segmente jeweils durch einen Steg miteinander verbunden. Vorzugsweise ist im Bereich des Steges eine Dicke der Funktionsschicht verringert.

Vorzugsweise werden die mindestens zwei Segmente mittels einer Schablone auf das Gewebe aufgebracht, wobei beim Auftragen der Funktionsschicht mittels verschiedener voneinander beabstandeter Ausschnitte in der Schablone jeweils die Segmente und die Stege ausgebildet werden. Alternativ werden vorzugsweise die mindestens zwei Segmente mittels mehrerer, insbesondere aneinandergelegter Schablonen realisiert, mittels welcher die Funktionsschicht auf das Gewebe aufgetragen wird. Alternativ werden vorzugsweise die Funktionsschichten der mindestens zwei Segmente jeweils nacheinander, insbesondere durch Aufbringen der Lagen der Funktionsschicht und Trocknen derselben auf das Gewebe aufgebracht. Nach dem Trocknen dieser Funktionsschichten werden diese insbesondere in einem Durchgang thermisch fixiert und aktiviert. Es wird also insbesondere ein erstes Segment der Funktionsschicht auf das Gewebe aufgebracht, jedoch vorzugsweise noch nicht aufgeschäumt, wobei im Anschluss ein zweites, von dem ersten Segment verschiedenes Segment der Funktionsschicht auf das Gewebe aufgebracht wird, und wobei anschließend das erste und das zweite Segment vorzugsweise gemeinsam aufgeschäumt werden. Dadurch kann insbesondere verhindert werden, dass ein erneutes Anlegen der Schablone zur Herstellung des zweiten Segments durch das aufgeschäumte erste Segment erschwert wird. Insbesondere können die mindestens zwei Segmente jedoch jeweils beliebig großflächig ausgebildet sein, so dass die Anordnung mehrerer, insbesondere nebeneinander angeordneter Segmente nicht zur Realisierung einer möglichst großen Fläche der Funktionsschicht erforderlich ist. Vorzugsweise wird eine Segmentierung der Funktionsschicht in die mindestens zwei Segmente aus funktionalen, optischen oder anderen Gründen durchgeführt.

Vorzugsweise werden die Stege zwischen zumindest zwei Segmenten nicht kleiner als 1 mm, besonders bevorzugt nicht kleiner als 2,5 mm ausgelegt, wobei insbesondere eine Breite von Ausschnittsbegrenzungen der Schablone, mithin ein Abstand zwischen zwei Ausschnitten der Schablone, nicht kleiner als 1 mm, besonders bevorzugt nicht kleiner als 2,5 mm gewählt wird. Dadurch wird in vorteilhafter Weise ein Zusammenlaufen des Druckgemischs der jeweiligen Segmente verhindert.

Insbesondere wird in vorteilhafter Weise eine Flexibilität der Gewebeanordnung mit dem Gewebe und der Funktionsschicht durch eine Elastizität der Lage oder der Lagen der Funktionsschicht beeinflusst, welche insbesondere durch verschiedene Zusammensetzungen der jeweiligen Druckgemische variiert werden kann. Darüber hinaus kann die Flexibilität der Gewebeanordnung durch verschiedene, insbesondere geometrische Muster und/oder Formen der aufgeschäumten Funktionsschicht beeinflusst werden. Weiterhin kann die Flexibilität der Gewebeanordnung insbesondere durch mittels Stegen realisierte Ausnehmungen in der Funktionsschicht beeinflusst werden. Die Bereiche dieser Ausnehmungen bleiben insbesondere auch dann flexibel, wenn die Funktionsschicht insgesamt steifer ausgestaltet wird. Wird ein dehnbares Gewebe verwendet, bleibt dessen Dehnbarkeit zumindest in Bereichen mit dünnerer oder unterbrochener Funktionsschicht zumindest teilweise bestehen, während die Dehnbarkeit insbesondere in den von den Lagen der Funktionsschicht bedeckten Bereichen eingeschränkt wird.

Es wird eine Ausführungsform des Verfahrens bevorzugt, die sich dadurch auszeichnet, dass das Aufbringen der Basislage der Funktionsschicht und/oder der ersten Lage der Funktionsschicht und/oder der mindestens einen zweiten Lage der Funktionsschicht mittels eines Verfahrens durchgeführt wird, welches ausgewählt ist aus einer Gruppe bestehend aus einem Flachdruckverfahren, einem 3D-Druckverfahren (dreidimensionales Druckverfahren) und einem Direktdruckverfahren. Besonders bevorzugt wird die Basislage mittels eines als Siebdruckverfahren ausgebildeten Flachdruckverfahrens erzeugt. Besonders bevorzugt werden die erste und/oder die mindestens eine zweite Lage mittels einer Schablone in einem Flachdruckverfahren realisiert. Das Flachdruckverfahren kann mittels einer Karusselldruckanlage durchgeführt werden, wodurch insbesondere ein serielles Aufbringen von Funktionsschichten auf Gewebe möglich ist. Insbesondere werden die Basislage, die erste Lage und/oder die mindestens eine zweite Lage der Funktionsschicht bei dem 3D-Druckverfahren und dem Direktdruckverfahren ohne eine insbesondere als Schablone oder Sieb ausgebildete Maske auf das Gewebe aufgebracht.

Insbesondere lassen sich mittels des Flachdruckverfahrens, 3D-Druckverfahrens, oder Direktdruckverfahrens großflächigere Funktionsschichten, insbesondere mit nur einem Segment, beispielsweise bis zu einer Länge oder Breite von 1,6 m, vorzugsweise von mehr als 1,6 m, realisieren, als mit Rotationsdruckverfahren, bei denen insbesondere durch die Größe von Rollen die Größe einer aufbringbaren Funktionsschicht begrenzt ist. Das erfindungsgemäße Verfahren weist auch Kostenvorteile insbesondere bei kleinen Serien oder individueller Fertigung gegenüber Rotationsdruckverfahren auf. Diese Vorteile ergeben sich insbesondere aus den im Vergleich zu Rollen für Rotationsdruckverfahren günstigeren Kosten von Masken für Flachdruckverfahren. Weiterhin ergeben sich durch Verwenden des Flachdruckverfahrens, 3D-Druckverfahrens und Direktdruckverfahrens im Vergleich zu Rotationsdruckverfahren größere Gestaltungsmöglichkeiten hinsichtlich von Mustern der Funktionsschicht.

Die Beschreibung der Gewebeanordnung einerseits sowie des Verfahrens andererseits sind komplementär zueinander zu verstehen. Merkmale der Gewebeanordnung, die explizit oder implizit in Zusammenhang mit dem Verfahren erläutert wurden, sind bevorzugt einzeln oder miteinander kombiniert Merkmale eines bevorzugten Ausführungsbeispiels der Gewebeanordnung. Verfahrensschritte, die explizit oder implizit in Zusammenhang mit der Gewebeanordnung erläutert wurden, sind bevorzugt einzeln oder miteinander kombiniert Schritte einer bevorzugten Ausführungsform des Verfahrens. Dieses zeichnet sich bevorzugt durch wenigstens einen Verfahrensschritt aus, der durch wenigstens ein Merkmal eines erfindungsgemäßen oder bevorzugten Ausführungsbeispiels der Gewebeanordnung bedingt ist. Die Gewebeanordnung zeichnet sich bevorzugt durch wenigstens ein Merkmal aus, welches durch wenigstens einen Schritt einer erfindungsgemäßen oder bevorzugten Ausführungsform des Verfahrens bedingt ist.

Die Erfindung wird im Folgenden anhand der Zeichnung näher erläutert. Dabei zeigen
- Figur 1: ein Ausführungsbeispiel einer Gewebeanordnung mit einem Gewebe und einer aufgeschäumten Funktionsschicht in einer Draufsicht auf eine erste Seite des Gewebes, und
- Figur 2: ein Ausführungsbeispiel der Gewebeanordnung gemäß Figur 1 in einer Draufsicht auf eine zweite Seite des Gewebes.

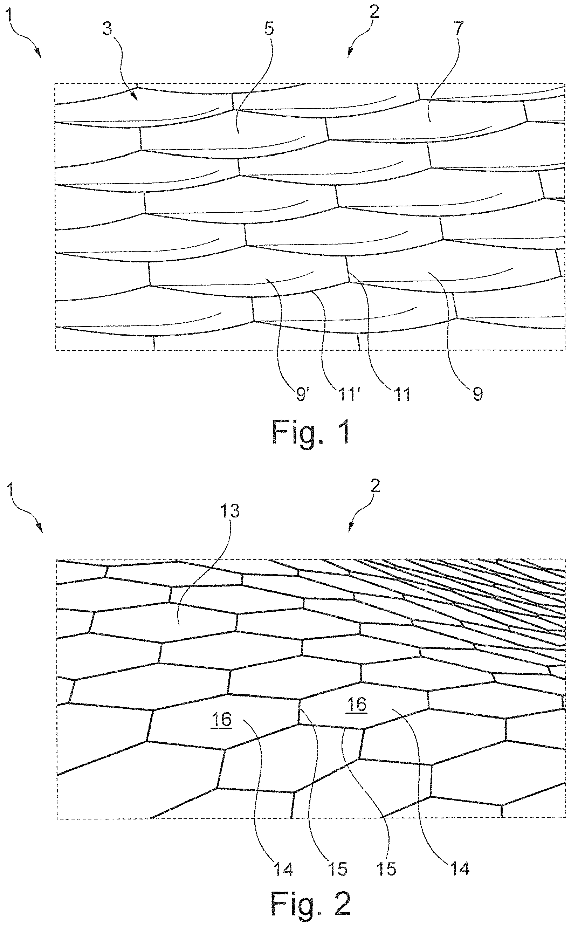

In Figur 1 ist eine Gewebeanordnung 2 mit einem Gewebe 1 und mit einer aufschäumbaren und/oder aufgeschäumten Funktionsschicht 3, hier mit einer aufgeschäumten Funktionsschicht 3, dargestellt, welche auf eine erste Seite 5 des Gewebes 1 fest aufgebracht ist. Die Gewebeanordnung 2 ist hier in einer Draufsicht auf die erste Seite 5 des Gewebes 1 dargestellt. Die Funktionsschicht 3 weist eine erste Lage 7 auf. Das Ausführungsbeispiel gemäß Figur 1 weist exemplarisch keine weiteren Lagen der Funktionsschicht 3 auf, welche auf die erste Lage 7 aufgebracht sind. Aus diesem Grund ist die erste Lage 7 der Funktionsschicht 3 in der Draufsicht gemäß Figur 1 sichtbar. Die erste Lage 7 der Funktionsschicht 3 weist ein erstes Druckgemisch mit einem Schaum auf. Der Schaum weist ein Bindemittel und eine Vielzahl von in dem Bindemittel gebundenen Kunststoffkugeln, welche mit einem Gas gefüllt sind, auf. Das erste Druckgemisch weist einen eine Dehnbarkeit der Funktionsschicht 3 steigernden Flexibilitätszusatz auf, welcher ein Acrylsäureester-Copolymer umfasst.

Das erste Druckgemisch weist vorzugsweise ein Schaumadditiv auf, welches ein aliphatisches Polyesterurethan aufweist.

Bei einem bevorzugten - hier nicht dargestellten - Ausführungsbeispiel weist die Funktionsschicht 3 mindestens eine zweite, ein zweites Druckgemisch aufweisende Lage auf, welche auf einer dem Gewebe 1 abgewandten Seite der ersten Lage 7 der Funktionsschicht 3 auf der ersten Lage 7 der Funktionsschicht 3 aufgebracht ist. Das zweite Druckgemisch weist vorzugsweise zumindest den Schaum und den Flexibilitätszusatz auf.

Vorzugsweise ist die Funktionsschicht 3 in mindestens zwei Segmente 9, 9' unterteilt, welche sich jeweils über verschiedene Bereiche der ersten Seite 5 des Gewebes 1 erstrecken. Bei dem Ausführungsbeispiel gemäß Figur 1 sind die Segmente 9, 9' jeweils gleichförmig ausgebildet, wobei sie jeweils als Sechseck ausgebildet sind. Insbesondere sind die mindestens zwei Segmente 9, 9' jeweils durch einen Steg 11 miteinander verbunden. Der Steg 11 ist bei dem Ausführungsbeispiel gemäß Figur 1 ein Teil eines die zwei Segmente 9, 9' jeweils seitlich umgebenden Umlaufstegs 11', wobei der Umlaufsteg 11' die Segmente 9, 9' jeweils mit benachbarten, insbesondere weiteren Segmenten verbindet. In Figur 1 ist eine Gewebeanordnung 2 dargestellt, welche eine Vielzahl von Segmenten 9, 9' aufweist, welche jeweils gleichförmig, insbesondere sechseckig ausgebildet sind. Die Segmente 9, 9' sind jeweils mittels Stegen 11 und/oder Umlaufstegen 11' miteinander verbunden. Die Umlaufstege 11' werden im Folgenden auch kurz als Stege bezeichnet.

Vorzugsweise ist im Bereich der Stege 11, 11' eine Dicke der Funktionsschicht 3 verringert. Bei dem Ausführungsbeispiel der Gewebeanordnung 2 gemäß Figur 1 ist die Funktionsschicht 3 im Bereich der Stege 11, 11' mit insbesondere verringerter Schichtdicke ausgebildet, wobei sich insbesondere eine durchgängige Bedeckung des Gewebes 1 durch die Funktionsschicht 3 ergibt. Bei einem anderen - hier nicht dargestellten - Ausführungsbeispiel werden die Stege 11, 11' insbesondere nur durch das Gewebe 1 gebildet, wobei die Segmente 9, 9' der Funktionsschicht 3 jeweils inselförmig, insbesondere ohne eine Verbindung über die erste Lage 7 vorliegen.

In Figur 2 ist eine zweite, der ersten Seite 5 gegenüberliegende Seite 13 des Gewebes 1 der Gewebeanordnung 2 in einer Draufsicht dargestellt. Gleiche und funktionsgleiche Elemente sind mit gleichen Bezugszeichen versehen, sodass insofern auf die vorangegangene Beschreibung verwiesen wird. Wie in Figur 2 sichtbar, ist das Gewebe 1 hier als Textil ausgebildet. Hierbei sind Segmentprägungen 14 der mindestens zwei Segmente 9, 9' sichtbar. Die die Segmente 9, 9' miteinander verbindenden Stege 11, 11' sind in Figur 2 als Stegprägungen 15 sichtbar.

Vorzugsweise ist eine Oberfläche des Gewebes 1 auf der zweiten, der ersten Seite 5 gegenüberliegenden Seite 13 des Gewebes 1 in einem der Funktionsschicht 3 gegenüberliegenden Bereich 16 konkav gewölbt ausgebildet. Insbesondere ist eine Oberfläche des Gewebes 1 auf der zweiten Seite 13 des Gewebes 1 jeweils in einem den mindestens zwei Segmenten 9, 9' der Funktionsschicht 3 gegenüberliegenden Bereich 16 konkav gewölbt ausgebildet. Insbesondere ist jedem der mindestens zwei Segmente 9, 9' auf der zweiten Seite 13 jeweils in den Bereichen 16 eine konkav gewölbt ausgebildete Segmentprägung 14 zugeordnet. Die konkav gewölbt ausgebildeten Segmentprägungen 14 in den Bereichen 16 sind jeweils gleichförmig und sechseckig ausgebildet. Insbesondere weisen die konkav gewölbt ausgebildeten Segmentprägungen 14 in den Bereichen 16 jeweils in einem mittleren Bereich derselben eine - aus Sicht eines Betrachters - maximale Tiefe der konkaven Wölbung auf. Insgesamt sind die konkav gewölbt ausgebildeten Segmentprägungen 14 - aus Sicht des Betrachters - in Richtung des Gewebes 1 hineingedrückt, mithin insbesondere relativ zu den Stegprägungen 15 der Stege 11, 11' in die Bildfläche hinein verlagert.

Im Folgenden wird ein Verfahren zum Herstellen einer Gewebeanordnung 2, insbesondere einer erfindungsgemäßen Gewebeanordnung 2, mit einem Gewebe 1 und mit einer aufgeschäumten Funktionsschicht 3 beschrieben:
In einem ersten Schritt wird eine erste Lage 7 der Funktionsschicht 3 mit einem ersten Druckgemisch auf das Gewebe 1 auf einer ersten Seite 5 des Gewebes 1 aufgebracht, wobei das erste Druckgemisch einen Schaum und einen Flexibilitätszusatz aufweist. Der Schaum umfasst ein Bindemittel und eine Vielzahl von in dem Bindemittel gebundenen mit Gas gefüllten Kunststoffkugeln. Der Flexibilitätszusatz bewirkt eine Steigerung einer Dehnbarkeit der Funktionsschicht 3 und umfasst ein Acrylsäureester-Copolymer.

In einem zweiten Schritt wird die erste Lage 7 der Funktionsschicht 3 getrocknet.

In einem dritten Schritt wird das Gewebe 1 mit der Funktionsschicht 3 durch Erwärmen thermisch fixiert und aktiviert, wobei das Gewebe 1 und die erste Lage 7 der Funktionsschicht 3 dauerhaft miteinander verbunden werden. Dabei werden die Kunststoffkugeln durch das Erwärmen des darin befindlichen Gases expandiert, wobei die erste Lage 7 der Funktionsschicht 3 dauerhaft aufgeschäumt wird.

Vorzugsweise wird dem ersten Druckgemisch ein Schaumadditiv zugemischt, welches ein aliphatisches Polyesterurethan umfasst.

Bei einer bevorzugten Ausführungsform des Verfahrens wird das Gewebe 1 vor dem Aufbringen der ersten Lage 7 der Funktionsschicht 3 auf eine - in den Figuren nicht dargestellte - Druckplatte fest aufgebracht. Vorzugsweise bleibt das Gewebe 1 zumindest bis zum Trocknen der ersten Lage 7 der Funktionsschicht 3 auf der Druckplatte aufgebracht.

Bevorzugt wird nach dem Aufbringen des Gewebes 1 auf die Druckplatte und/oder vor dem Aufbringen der ersten Lage 7 der Funktionsschicht 3 auf das Gewebe 1 eine - in den Figuren nicht sichtbare - Basislage der Funktionsschicht 3 mit einem Basisdruckgemisch auf der ersten Seite 5 des Gewebes 1 auf das Gewebe 1 mit einer Dicke, welche geringer ist als eine Dicke der ersten Lage 7 der Funktionsschicht 3, aufgebracht. Vorzugsweise wird anschließend die Basislage der Funktionsschicht 3 getrocknet. Bevorzugt wird im Anschluss auf die getrocknete Basislage der Funktionsschicht 3 die erste Lage 7 der Funktionsschicht 3 aufgebracht. Vorzugsweise werden durch das thermische Fixieren und Aktivieren das Gewebe 1, die Basislage der Funktionsschicht 3 und die erste Lage 7 der Funktionsschicht 3 dauerhaft miteinander verbunden.

Bei einer bevorzugten Ausführungsform des Verfahrens wird nach dem Trocknen der ersten Lage 7 der Funktionsschicht 3 mindestens eine zweite Lage der Funktionsschicht 3 mit einem zweiten Druckgemisch, welches zumindest den Schaum und den Flexibilitätszusatz aufweist, auf die erste Lage 7 der Funktionsschicht 3 aufgebracht. Vorzugsweise wird anschließend die mindestens eine zweite Lage der Funktionsschicht 3 getrocknet. Insbesondere werden durch das thermische Fixieren und Aktivieren die erste Lage 7 und die mindestens eine zweite Lage der Funktionsschicht 3 dauerhaft miteinander verbunden. Dabei werden insbesondere die in dem zweiten Druckgemisch in dem Schaum enthaltenen Kunststoffkugeln durch das Erwärmen des darin befindlichen Gases expandiert, wobei die mindestens eine zweite Lage der Funktionsschicht 3 dauerhaft aufgeschäumt wird.

Vorzugsweise werden das Basisdruckgemisch, das erste Druckgemisch und das zweite Druckgemisch jeweils mit einer bestimmten Zusammensetzung bereitgestellt, wobei mindestens zwei der jeweiligen bestimmten Zusammensetzungen voneinander verschieden sind.

Bei einer bevorzugten Ausführungsform des Verfahrens wird das Gewebe 1 mit der Funktionsschicht 3 unmittelbar vor dem thermischen Fixieren und Aktivieren weiterverarbeitet. Das weiterverarbeitete Gewebe 1 mit der Funktionsschicht 3 wird insbesondere nach Abschluss der Weiterverarbeitung thermisch fixiert und aktiviert.

Vorzugsweise wird in das Gewebe 1 mit der Funktionsschicht 3 eine Zugspannung eingebracht, welche während des thermischen Fixierens und Aktivierens zumindest zeitweise vorliegt. Dabei wird in Abhängigkeit von der Zugspannung auf einer zweiten, der ersten Seite 5 gegenüberliegenden Seite 13 des Gewebes 1 in einem der Funktionsschicht 3 gegenüberliegenden Bereich 16 eine dauerhafte konkave Wölbung einer Oberfläche des Gewebes 1 eingestellt. Insbesondere wird in Abhängigkeit von der Zugspannung auf der zweiten Seite 13 des Gewebes 1 jeweils in einem einem Segment 9, 9' der Funktionsschicht 3 gegenüberliegenden Bereich 16 jeweils eine dauerhafte konkave Wölbung einer Oberfläche des Gewebes 1 eingestellt.

Bei einer weiteren bevorzugten Ausführungsform des Verfahrens wird auf die erste Lage 7 der Funktionsschicht 3 und/oder die mindestens eine zweite Lage der Funktionsschicht 3 vor dem Trocknen dieser Lage(n) 7 mindestens ein weiteres Gewebe aufgebracht. Durch das thermische Fixieren und Aktivieren werden diese Lage(n) 7 und das mindestens eine weitere Gewebe insbesondere dauerhaft miteinander verbunden.

Bevorzugt wird das Aufbringen der Basislage der Funktionsschicht 3 und/oder der ersten Lage 7 der Funktionsschicht 3 und/oder der mindestens einen zweiten Lage der Funktionsschicht 3 mittels eines Verfahrens durchgeführt, welches ausgewählt ist aus einer Gruppe bestehend aus einem Flachdruckverfahren, einem 3D-Druckverfahren und einem Direktdruckverfahren.

Insgesamt zeigt sich, dass mittels der Gewebeanordnung 2 mit dem Gewebe 1 und der aufschäumbaren und/oder aufgeschäumten Funktionsschicht 3 sowie des Verfahrens zum Herstellen der Gewebeanordnung 2 Funktionsschichten 3 mit einer erhöhten Dicke auf das Gewebe 1 aufgebracht werden können, wobei Spannungsrisse in der Funktionsschicht 3 durch das Trocknen und/oder thermische Fixieren und Aktivieren des Gewebes 1 mit der Funktionsschicht 3 sicher verhindert werden.

## Patentansprüche

1. Gewebeanordnung (2) mit einem Gewebe (1) und einer aufschäumbaren und/oder aufgeschäumten Funktionsschicht (3), welche auf einer ersten Seite (5) des Gewebes (1) fest aufgebracht ist, wobei
- die Funktionsschicht (3) eine erste Lage (7) aufweist, wobei
- die erste Lage (7) der Funktionsschicht (3) ein erstes Druckgemisch mit einem Schaum aufweist, wobei
- der Schaum ein Bindemittel und eine Vielzahl von in dem Bindemittel gebundenen Kunststoffkugeln, welche mit einem Gas gefüllt sind, aufweist,
**dadurch gekennzeichnet, dass**
- das erste Druckgemisch einen eine Dehnbarkeit der Funktionsschicht (3) steigernden Flexibilitätszusatz aufweist, welcher ein Acrylsäureester-Copolymer umfasst,
- wobei der Flexibilitätszusatz mit einem Massenanteil von mindestens 7 % bis höchstens 15 % an dem ersten Druckgemisch beigemischt ist.

2. Gewebeanordnung (2) nach Anspruch 1, **dadurch gekennzeichnet, dass** das erste Druckgemisch ein Schaumadditiv aufweist, welches ein aliphatisches Polyesterurethan umfasst.

3. Gewebeanordnung (2) nach einem der vorhergehenden Ansprüche, **dadurch gekennzeichnet, dass** die Funktionsschicht (3) mindestens eine zweite, ein zweites Druckgemisch aufweisende Lage aufweist, welche auf einer dem Gewebe (1) abgewandten Seite der ersten Lage (7) der Funktionsschicht (3) auf der ersten Lage (7) der Funktionsschicht (3) aufgebracht ist, wobei das zweite Druckgemisch zumindest den Schaum und den Flexibilitätszusatz aufweist.

4. Gewebeanordnung (2) nach einem der vorhergehenden Ansprüche, **dadurch gekennzeichnet, dass** eine Oberfläche des Gewebes (1) auf einer zweiten, der ersten Seite (5) gegenüberliegenden Seite (13) des Gewebes (1) in einem der Funktionsschicht (3) gegenüberliegenden Bereich (16) konkav gewölbt ausgebildet ist.

5. Gewebeanordnung (2) nach einem der vorhergehenden Ansprüche, **dadurch gekennzeichnet, dass**
- die Funktionsschicht (3) in mindestens zwei Segmente (9,9') aufgeteilt ist, welche sich jeweils über verschiedene Bereiche der ersten Seite (5) des Gewebes (1) erstrecken, wobei
- die mindestens zwei Segmente (9,9') bevorzugt jeweils durch einen Steg (11,11') miteinander verbunden sind, und wobei
- im Bereich des Steges (11,11') eine Dicke der Funktionsschicht (3) verringert ist.

6. Verfahren zum Herstellen einer Gewebeanordnung (2) mit einem Gewebe (1) und einer aufgeschäumten Funktionsschicht (3) nach einem der Ansprüche 1 bis 5, **gekennzeichnet durch** die folgenden Schritte:
- Aufbringen einer ersten Lage (7) der Funktionsschicht (3) mit einem ersten Druckgemisch auf ein Gewebe (1) auf einer ersten Seite (5) des Gewebes (1), wobei das erste Druckgemisch einen Schaum, welcher ein Bindemittel und eine Vielzahl von in dem Bindemittel gebundenen mit Gas gefüllten Kunststoffkugeln umfasst, und einen eine Dehnbarkeit der Funktionsschicht (3) steigernden Flexibilitätszusatz, welcher ein Acrylsäureester-Copolymer umfasst, aufweist,
- Trocknen der ersten Lage (7) der Funktionsschicht (3),
- Thermisches Fixieren und Aktivieren des Gewebes (1) mit der Funktionsschicht (3) durch Erwärmen, wobei das Gewebe (1) und die erste Lage (7) der Funktionsschicht (3) dauerhaft miteinander verbunden werden, wobei die Kunststoffkugeln durch das Erwärmen des darin befindlichen Gases expandiert werden, und wobei die erste Lage (7) der Funktionsschicht (3) dauerhaft aufgeschäumt wird.

7. Verfahren nach Anspruch 6, **dadurch gekennzeichnet, dass** dem ersten Druckgemisch ein Schaumadditiv zugemischt wird, welches ein aliphatisches Polyesterurethan umfasst.

8. Verfahren nach Anspruch 6 oder 7, **dadurch gekennzeichnet, dass** das Gewebe (1) vor dem Aufbringen der ersten Lage (7) der Funktionsschicht (3) auf einer Druckplatte fest aufgebracht wird, wobei das Gewebe (1) zumindest bis zum Trocknen der ersten Lage (7) der Funktionsschicht (3) auf der Druckplatte aufgebracht bleibt.

9. Verfahren nach einem der Ansprüche 6 bis 8, **dadurch gekennzeichnet, dass**
- nach dem Aufbringen des Gewebes (1) auf der Druckplatte und/oder vor dem Aufbringen der ersten Lage (7) der Funktionsschicht (3) auf dem Gewebe (1) eine Basislage der Funktionsschicht (3) mit einem Basisdruckgemisch auf der ersten Seite (5) des Gewebes (1) auf dem Gewebe (1) in einer Dicke, welche geringer ist als eine Dicke der ersten Lage (7) der Funktionsschicht (3), aufgebracht wird, wobei
- die Basislage der Funktionsschicht (3) getrocknet wird, wobei
- auf die getrocknete Basislage der Funktionsschicht (3) die erste Lage (7) der Funktionsschicht (3) aufgebracht wird, und wobei
- durch das thermische Fixieren und Aktivieren das Gewebe (1), die Basislage der Funktionsschicht (3) und die erste Lage (7) der Funktionsschicht (3) dauerhaft miteinander verbunden werden.

10. Verfahren nach einem der Ansprüche 6 bis 9, **dadurch gekennzeichnet, dass**
- nach dem Trocknen der ersten Lage (7) der Funktionsschicht (3) mindestens eine zweite Lage der Funktionsschicht (3) mit einem zweiten Druckgemisch, welches zumindest den Schaum und den Flexibilitätszusatz aufweist, auf der ersten Lage (7) der Funktionsschicht (3) aufgebracht wird, wobei
- die mindestens eine zweite Lage der Funktionsschicht (3) getrocknet wird, wobei
- durch das thermische Fixieren und Aktivieren die erste (7) und die mindestens eine zweite Lage der Funktionsschicht (3) dauerhaft miteinander verbunden werden, wobei die in dem zweiten Druckgemisch in dem Schaum enthaltenen Kunststoffkugeln durch das Erwärmen des darin befindlichen Gases expandiert werden, und wobei die mindestens eine zweite Lage der Funktionsschicht (3) dauerhaft aufgeschäumt wird.

11. Verfahren nach einem der Ansprüche 6 bis 10, **dadurch gekennzeichnet, dass** das Basisdruckgemisch, das erste Druckgemisch und das zweite Druckgemisch jeweils mit einer bestimmten Zusammensetzung bereitgestellt werden, wobei mindestens zwei der jeweiligen bestimmten Zusammensetzungen voneinander verschieden sind.

12. Verfahren nach einem der Ansprüche 6 bis 11, **dadurch gekennzeichnet, dass** das Gewebe (1) mit der Funktionsschicht (3) unmittelbar vor dem thermischen Fixieren und Aktivieren weiterverarbeitet wird, wobei das weiterverarbeitete Gewebe (1) mit der Funktionsschicht (3) thermisch fixiert und aktiviert wird.

13. Verfahren nach einem der Ansprüche 6 bis 12, **dadurch gekennzeichnet, dass** in das Gewebe (1) mit der Funktionsschicht (3) eine Zugspannung eingebracht wird, welche während des thermischen Fixierens und Aktivierens zumindest zeitweise vorliegt, wobei in Abhängigkeit von der Zugspannung auf einer zweiten, der ersten Seite (5) gegenüberliegenden Seite (13) des Gewebes (1) in einem der Funktionsschicht (3) gegenüberliegenden Bereich (16) eine dauerhafte konkave Wölbung einer Oberfläche des Gewebes (1) eingestellt wird.

14. Verfahren nach einem der Ansprüche 6 bis 13, **dadurch gekennzeichnet, dass**
- auf die erste Lage (7) der Funktionsschicht (3) und/oder die mindestens eine zweite Lage der Funktionsschicht (3) vor dem Trocknen dieser Lage(n) (7) mindestens ein weiteres Gewebe aufgebracht wird, wobei
- durch das thermische Fixieren und Aktivieren diese Lage(n) (7) und das mindestens eine weitere Gewebe dauerhaft miteinander verbunden werden.

15. Verfahren nach einem der Ansprüche 6 bis 14, **dadurch gekennzeichnet, dass** das Aufbringen der Basislage der Funktionsschicht (3) und/oder der ersten Lage (7) der Funktionsschicht (3) und/oder der mindestens einen zweiten Lage der Funktionsschicht (3) mittels eines Verfahrens durchgeführt wird, welches ausgewählt ist aus einer Gruppe bestehend aus einem Flachdruckverfahren, einem 3D-Druckverfahren und einem Direktdruckverfahren.

## Claims

1. A fabric arrangement (2) with a fabric (1) and a foamable and/or foamed functional layer (3) which is firmly applied to a first side (5) of the fabric (1), wherein
- the functional layer (3) has a first layer (7), wherein
- the first layer (7) of the functional layer (3) has a first printing mixture with a foam, wherein
- the foam has a binder and a plurality of plastic spheres bound in the binder which are filled with a gas,
**characterised in that**
- the first printing mixture comprises a flexibility additive increasing an elasticity of the functional layer (3), which comprises an acrylic acid ester copolymer,
- wherein the flexibility additive is admixed with a mass proportion of at least 7% to at most 15% of the first printing mixture.

2. The fabric arrangement (2) according to claim 1, **characterized in that** the first printing mixture comprises a foam additive comprising an aliphatic polyester urethane.

3. The fabric arrangement (2) according to one of the preceding claims, **characterized in that** the functional layer (3) has at least one second layer comprising a second printing mixture, which is applied to the first layer (7) of the functional layer (3) on a side of the first layer (7) facing away from the fabric (1), the second printing mixture comprising at least the foam and the flexibility additive.

4. The fabric arrangement (2) according to one of the preceding claims, **characterized in that** a surface of the fabric (1) on a second side (13) of the fabric (1) opposite the first side (5) is concavely curved in a region (16) opposite the functional layer (3).

5. The fabric arrangement (2) according to one of the preceding claims, **characterized in that**
- the functional layer (3) is divided into at least two segments (9, 9') which each extend over different regions of the first side (5) of the fabric (1), wherein
- the at least two segments (9, 9') are preferably connected to one another in each case by a bar (11, 11'), and wherein
- a thickness of the functional layer (3) is reduced in the region of the bar (11, 11').

6. A process for preparing a fabric arrangement (2) with a fabric (1) and a foamed functional layer (3) according to one of claims 1 to 5, **characterised by** the following steps:
- Applying a first layer (7) of the functional layer (3) with a first printing mixture to a fabric (1) on a first side (5) of the fabric (1), wherein the first printing mixture comprises a foam comprising a binder and a plurality of gas-filled plastic spheres bound in the binder, and a flexibility additive increasing an elasticity of the functional layer (3), which comprises an acrylic acid ester copolymer,
- drying the first layer (7) of the functional layer (3),
- thermally fixing and activating the fabric (1) with the functional layer (3) by heating, wherein the fabric (1) and the first layer (7) of the functional layer (3) are permanently bonded together, wherein the plastic spheres are expanded by heating the gas therein, and wherein the first layer (7) of the functional layer (3) is permanently foamed.

7. The process according to claim 6, **characterized in that** a foam additive comprising an aliphatic polyester urethane is admixed to the first printing mixture.

8. The process according to claim 6 or 7, **characterized in that** the fabric (1) is firmly applied to a printing plate before the applying of the first layer (7) of the functional layer (3), the fabric (1) remaining applied to the printing plate at least until the first layer (7) of the functional layer (3) dries.

9. The process according to any one of claims 6 to 8, **characterized in that**
- after the applying of the fabric (1) on the printing plate and/or before the applying of the first layer (7) of the functional layer (3) on the fabric (1), a base layer of the functional layer (3) with a base printing mixture is applied on the first side (5) of the fabric (1) on the fabric (1) in a thickness which is smaller than a thickness of the first layer (7) of the functional layer (3), wherein
- the base layer of the functional layer (3) is dried, wherein
- the first layer (7) of the functional layer (3) is applied to the dried base layer of the functional layer (3), and wherein
- the fabric (1), the base layer of the functional layer (3) and the first layer (7) of the functional layer (3) are permanently bonded to one another by the thermal fixing and activating.

10. The process according to any one of claims 6 to 9, **characterized in that**
- after drying the first layer (7) of the functional layer (3), at least one second layer of the functional layer (3) is applied to the first layer (7) of the functional layer (3) with a second printing mixture which has at least the foam and the flexibility additive, wherein
- the at least one second layer of the functional layer (3) is dried, wherein
- the first (7) and the at least one second layer of the functional layer (3) are permanently bonded to one another by the thermal fixing and activating, wherein the plastic spheres contained in the foam in the second printing mixture are expanded by the heating of the gas contained therein, and wherein the at least one second layer of the functional layer (3) is permanently foamed.

11. The process according to any one of claims 6 to 10, **characterized in that** the base printing mixture, the first printing mixture and the second printing mixture are each provided with a particular composition, wherein at least two of the respective particular compositions are different from each other.

12. The process according to any one of claims 6 to 11, **characterized in that** the fabric (1) with the functional layer (3) is further processed immediately before thermal fixing and activating, wherein the further processed fabric (1) with the functional layer (3) is thermally fixed and activated.

13. The process according to one of claims 6 to 12, **characterized in that** a tensile stress is introduced into the fabric (1) with the functional layer (3), which tensile stress is present at least temporarily during the thermal fixing and activating, a permanent concave curvature of a surface of the fabric (1) being set as a function of the tensile stress on a second side (13) of the fabric (1) opposite the first side (5) in a region (16) opposite the functional layer (3).

14. The process according to any one of claims 6 to 13, **characterized in that**
- at least one further fabric is applied to the first layer (7) of the functional layer (3) and/or the at least one second layer of the functional layer (3) before drying of this layer(s) (7), wherein
- this layer(s) (7) and the at least one further fabric are permanently bonded to one another by the thermal fixing and activating.

15. The process according to any one of claims 6 to 14, **characterized in that** the application of the base layer of the functional layer (3) and/or of the first layer (7) of the functional layer (3) and/or of the at least one second layer of the functional layer (3) is carried out by means of a process selected from a group consisting of a flat printing process, a 3D printing process and a direct printing process.

## Revendications

1. Agencement de tissu (2) avec un tissu (1) et une couche fonctionnelle (3) moussable et/ou moussée qui est appliquée fermement sur un premier côté (5) du tissu (1), dans lequel
- la couche fonctionnelle (3) a une première couche (7), dans laquelle
- la première couche (7) de la couche fonctionnelle (3) a un premier mélange d'impression avec une mousse, dans lequel
- la mousse a un liant et une pluralité de sphères en plastique liées dans le liant qui sont remplies d'un gaz,
**caractérisé en ce que**
- le premier mélange d'impression comprend un additif de flexibilité augmentant l'élasticité de la couche fonctionnelle (3), qui comprend un copolymère d'ester d'acide acrylique,
- l'additif de flexibilité étant mélangé dans une proportion massique d'au moins 7 % à au plus 15 % du premier mélange d'impression.

2. L'agencement de tissu (2) selon la revendication 1, **caractérisé en ce que** le premier mélange d'impression comprend un additif de mousse comprenant un polyester uréthane aliphatique.

3. L'agencement de tissu (2) selon l'une des revendications précédentes, **caractérisé en ce que** la couche fonctionnelle (3) a au moins une deuxième couche comprenant un deuxième mélange d'impression, qui est appliqué sur la première couche (7) de la couche fonctionnelle (3) sur un côté de la première couche (7) opposé au tissu (1), le deuxième mélange d'impression comprenant au moins la mousse et l'additif de flexibilité.

4. L'agencement de tissu (2) selon l'une des revendications précédentes, **caractérisé en ce qu'**une surface du tissu (1) sur un deuxième côté (13) du tissu (1) opposé au premier côté (5) est incurvée de manière concave dans une région (16) opposée à la couche fonctionnelle (3).

5. L'agencement de tissu (2) selon l'une des revendications précédentes, **caractérisé en ce que**
- la couche fonctionnelle (3) est divisée en au moins deux segments (9, 9') qui s'étendent chacun sur des régions différentes du premier côté (5) du tissu (1), dans lequel
- les au moins deux segments (9, 9') sont de préférence reliés entre eux par une barre (11, 11'), et dans lequel
- une épaisseur de la couche fonctionnelle (3) est réduite dans la zone de la barre (11, 11').

6. Procédé de fabrication d'un agencement de tissu (2) avec un tissu (1) et une couche fonctionnelle moussée (3) selon l'une des revendications 1 à 5, **caractérisé par** les étapes suivantes :
- appliquer une première couche (7) de la couche fonctionnelle (3) avec un premier mélange d'impression sur un tissu (1) sur un premier côté (5) du tissu (1), dans lequel le premier mélange d'impression comprend une mousse comprenant un liant et une pluralité de sphères plastiques remplies de gaz liées dans le liant, et un additif de flexibilité augmentant une élasticité de la couche fonctionnelle (3), qui comprend un copolymère d'ester d'acide acrylique,
- séchage de la première couche (7) de la couche fonctionnelle (3),
- fixer thermiquement et activer le tissu (1) avec la couche fonctionnelle (3) par chauffage, dans lequel le tissu (1) et la première couche (7) de la couche fonctionnelle (3) sont liés ensemble de manière permanente, dans lequel les sphères plastiques sont expansées par chauffage du gaz qu'elles contiennent, et dans lequel la première couche (7) de la couche fonctionnelle (3) est expansée de manière permanente.

7. Le procédé selon la revendication 6, **caractérisé en ce qu'**un additif de mousse comprenant un polyester uréthane aliphatique est mélangé au premier mélange d'impression.

8. Le procédé selon la revendication 6 ou 7, **caractérisé en ce que** le tissu (1) est appliqué fermement sur une plaque d'impression avant l'application de la première couche (7) de la couche fonctionnelle (3), le tissu (1) restant appliqué sur la plaque d'impression au moins jusqu'au séchage de la première couche (7) de la couche fonctionnelle (3).

9. Le procédé selon l'une quelconque des revendications 6 à 8, **caractérisé en ce que**
- après l'application du tissu (1) sur la plaque d'impression et/ou avant l'application de la première couche (7) de la couche fonctionnelle (3) sur le tissu (1), une couche de base de la couche fonctionnelle (3) avec un mélange d'impression de base est appliquée sur la première côté (5) du tissu (1) sur le tissu (1) en une épaisseur qui est inférieure à une épaisseur de la première couche (7) de la couche fonctionnelle (3), dans lequel
- la couche de base de la couche fonctionnelle (3) est séchée, dans lequel
- la première couche (7) de la couche fonctionnelle (3) est appliquée sur la couche de base séchée de la couche fonctionnelle (3), et dans lequel
- le tissu (1), la couche de base de la couche fonctionnelle (3) et la première couche (7) de la couche fonctionnelle (3) sont liés de manière permanente les uns aux autres par la fixation thermique et l'activation.

10. Le procédé selon l'une quelconque des revendications 6 à 9, **caractérisé en ce que**
- après le séchage de la première couche (7) de la couche fonctionnelle (3), on applique au moins une deuxième couche de la couche fonctionnelle (3) sur la première couche (7) de la couche fonctionnelle (3) avec un deuxième mélange d'impression qui a au moins la mousse et l'additif de flexibilité, dans lequel
- la au moins une deuxième couche de la couche fonctionnelle (3) est séchée, dans lequel
- la première (7) et la au moins une deuxième couche de la couche fonctionnelle (3) sont liées l'une à l'autre de manière permanente par fixation thermique et activation, les sphères de plastique contenues dans la mousse du deuxième mélange d'impression étant expansées par le chauffage du gaz qu'elles contiennent, et la au moins une deuxième couche de la couche fonctionnelle (3) étant expansée de manière permanente.

11. Le procédé selon l'une quelconque des revendications 6 à 10, **caractérisé en ce que** le mélange d'impression de base, le premier mélange d'impression et le deuxième mélange d'impression sont chacun pourvus d'une composition particulière, dans lequel au moins deux des compositions particulières respectives sont différentes les unes des autres.

12. Le procédé selon l'une quelconque des revendications 6 à 11, **caractérisé en ce que** le tissu (1) avec la couche fonctionnelle (3) est encore traité immédiatement avant la fixation thermique et l'activation, le tissu (1) avec la couche fonctionnelle (3) encore traité étant fixé thermiquement et activé.

13. Le procédé selon l'une quelconque des revendications 6 à 12, **caractérisé en ce qu'**une contrainte de traction est introduite dans le tissu (1) avec la couche fonctionnelle (3), laquelle contrainte de traction est présente au moins temporairement pendant la fixation thermique et l'activation, une courbure concave permanente d'une surface du tissu (1) étant établie en fonction de la contrainte de traction sur un deuxième côté (13) du tissu (1) opposé au premier côté (5) dans une zone (16) opposée à la couche fonctionnelle (3).

14. Le procédé selon l'une quelconque des revendications 6 à 13, **caractérisé en ce que**
- au moins un autre tissu est appliqué sur la première couche (7) de la couche fonctionnelle (3) et/ou sur la au moins une deuxième couche de la couche fonctionnelle (3) avant le séchage de cette ou ces couches (7), dans lequel
- cette (ces) couche(s) (7) et le au moins un autre tissu sont liés de manière permanente l'un à l'autre par la fixation thermique et l'activation.

15. Le procédé selon l'une quelconque des revendications 6 à 14, **caractérisé en ce que** l'application de la couche de base de la couche fonctionnelle (3) et/ou de la première couche (7) de la couche fonctionnelle (3) et/ou de la au moins une deuxième couche de la couche fonctionnelle (3) est réalisée au moyen d'un procédé choisi dans un groupe constitué par un procédé d'impression à plat, un procédé d'impression 3D et un procédé d'impression directe.
